# EUROPEAN PATENT APPLICATION

(11) **EP 4 351 239 A1**
(43) Date of publication of application: **10.04.2024**
(21) Application number: 22815279.9
(22) Date of filing: 31.05.2022
(51) Int. Cl.: H04W 68/00, H04W 76/27

(54) **INFORMATION PROCESSING METHOD AND APPARATUS, COMMUNICATION DEVICE, AND READABLE STORAGE MEDIUM**

(30) Priority: 02.06.2021 CN 202110616042
(71) Applicant: Vivo Mobile Communication Co., Ltd., Dongguan, Guangdong 523863 (CN)
(72) Inventor: KE, Xiaowan, Dongguan, Guangdong 523863 (CN); BAO, Wei, Dongguan, Guangdong 523863 (CN)
(74) Representative: Lavoix
(86) International application number: PCT/CN2022/096325
(87) International publication number: WO 2022/253235

(57) **Abstract**

This application discloses an information processing method and apparatus, a communication device, and a readable storage medium, and pertains to the field of communication technologies. The information processing method in embodiments of this application includes: performing a first operation or a second operation, where the first operation includes at least one of the following: sending a NAS leave request to a network, and sending a NAS paging rejection to the network; and the second operation includes at least one of the following: sending an AS leave request to the network, and sending an AS paging rejection to the network.

## Description

### CROSS-REFERENCE TO RELATED APPLICATIONS

This application claims priority to Chinese Patent Application No. 202110616042.8, filed on June 02, 2021 in China, which is incorporated herein by reference in its entirety.

### TECHNICAL FIELD

This application pertains to the field of communications technologies, and specifically relates to an information processing method and apparatus, a communication device, and a readable storage medium.

### BACKGROUND

In an existing network, a multi-SIM terminal is increasingly commonly used, and there may be two or more subscriber identity module (Subscriber Identity Module, SIM) cards on the multi-SIM terminal. For the multi-SIM terminal, currently, a paging restriction (Paging Restriction, PR) function is introduced to improve performance of the multi-SIM terminal. However, in the case of introducing PR, it is not yet clear how to release a terminal state.

### SUMMARY

Embodiments of this application provide an information processing method and apparatus, a communication device, and a readable storage medium, to resolve a problem of how to release a terminal state in the case of introducing PR.

According to a first aspect, an information processing method is provided, where the method is applied to a first communication device and includes:
performing a first operation or a second operation, where
the first operation includes at least one of the following:
   sending a non-access stratum (Non-Access Stratum, NAS) leave request to a network, and sending a NAS paging rejection to the network; and
   the second operation includes at least one of the following:
      sending an access stratum (Access Stratum, AS) leave request to the network, and sending an AS paging rejection to the network.

According to a second aspect, an information processing method is provided, where the method is applied to a second communication device and includes:
performing a third operation or a fourth operation, where
the third operation includes at least one of the following:
   sending paging restriction information to a network; and
   sending state release tendency information to the network, where the state release tendency information is used to indicate one of the following: no tendency and tending to be released to an idle state; and
   the fourth operation includes at least one of the following:
      sending, to the network, information used to request to be released to an inactive state;
      sending state release tendency information to the network; and
      sending state release tendency information to the network, where the state release tendency information is used to indicate tending to be released to an inactive state.

According to a third aspect, an information processing method is provided, where the method is applied to a third communication device and includes:
obtaining at least one of the following: first information, a notification that the terminal enters an inactive state, information used to instruct to delete paging restriction information, and second information; and
performing a fifth operation according to the obtained information, where
the first information includes at least one of the following: paging restriction information, information used to request to be released to an inactive state, state release tendency information, and a terminal capability; and the second information includes at least one of the following: a network policy and a network capability; and
the fifth operation includes at least one of the following:
   determining that a priority of the paging restriction information is higher than a priority of the information about tending to be released to an inactive state, or determining that a priority of the paging restriction information is higher than a priority of the state release tendency information;
   determining that a priority of the information about tending to be released to an inactive state is higher than a priority of the paging restriction information, or determining that a priority of the state release tendency information is higher than a priority of the paging restriction information;
   determining to accept paging restriction information, or determining not to accept paging restriction information;
   releasing the terminal to an idle state, or releasing the terminal to an inactive state;
   deleting paging restriction information;
   sending second indication information, where the second indication information is used to indicate one of the following: accepting paging restriction information and not accepting paging restriction information; and
   sending third indication information, where the third indication information is used to indicate at least one of the following: supporting a paging restriction function and not supporting a paging restriction function.

According to a fourth aspect, an information processing method is provided, where the method is applied to a fourth communication device and includes:
obtaining third information and/or fourth information; and
performing a sixth operation according to the third information and/or the fourth information, where
the third information includes at least one of the following: a leave request; paging rejection; a first NAS data packet; fourth indication information, where the fourth indication information is used to indicate that the first NAS data packet includes paging restriction information; AS paging restriction information; and information used to instruct to delete paging restriction information;
the fourth information includes at least one of the following: second indication information, where the second indication information is used to indicate one of the following: accepting paging restriction information and not accepting paging restriction information; and third indication information, where the third indication information is used to indicate at least one of the following: supporting a paging restriction function and not supporting a paging restriction function; and
the sixth operation includes at least one of the following:
   sending the first NAS data packet to a first target end;
   sending, to the first target end, the information used to instruct to delete paging restriction information;
   storing the fourth indication information;
   releasing the terminal to an idle state or releasing the terminal to a non-connected state;
   performing an operation of releasing the terminal;
   performing an operation of waiting for a period of time; and
   performing an operation of starting timing.

According to a fifth aspect, an information processing method is provided, where the method is applied to a fifth communication device and includes:
obtaining paging restriction information or a second NAS data packet; and
discarding or ignoring the paging restriction information, or discarding or ignoring the second NAS data packet, where
the second NAS data packet is a NAS data packet received together with an AS leave request or an AS paging rejection.

According to a sixth aspect, an information processing method is provided, where the method is applied to a sixth communication device and includes:
sending first indication information, where the first indication information is used to indicate at least one of the following: allowing the terminal to concurrently send paging restriction information when sending a NAS leave request or a NAS paging rejection; and not allowing the terminal to concurrently send paging restriction information when sending an AS leave request or an AS paging rejection.

According to a seventh aspect, an information processing apparatus is provided, where the apparatus is applied to a first communication device and includes:
a first execution module, configured to perform a first operation or a second operation, where
the first operation includes at least one of the following:
   sending a NAS leave request to a network, and sending a NAS paging rejection to the network; and
   the second operation includes at least one of the following:
      sending an AS leave request to the network, and sending an AS paging rejection to the network.

According to an eighth aspect, an information processing apparatus is provided, where the apparatus is applied to a second communication device and includes:
a second execution module, configured to perform a third operation or a fourth operation, where
the third operation includes at least one of the following:
   sending paging restriction information to a network; and
   sending state release tendency information to the network, where the state release tendency information is used to indicate one of the following: no tendency and tending to be released to an idle state; and
   the fourth operation includes at least one of the following:
      sending, to the network, information used to request to be released to an inactive state;
      sending state release tendency information to the network; and
      sending state release tendency information to the network, where the state release tendency information is used to indicate tending to be released to an inactive state.

According to a ninth aspect, an information processing apparatus is provided, where the apparatus is applied to a third communication device and includes:
a first obtaining module, configured to obtain at least one of the following: first information, a notification that the terminal enters an inactive state, information used to instruct to delete paging restriction information, and second information; and
a third execution module, configured to perform a fifth operation according to the obtained information, where
the first information includes at least one of the following: paging restriction information, information used to request to be released to an inactive state, state release tendency information, and a terminal capability; and the second information includes at least one of the following: a network policy and a network capability; and
the fifth operation includes at least one of the following:
   determining that a priority of the paging restriction information is higher than a priority of the information about tending to be released to an inactive state, or determining that a priority of the paging restriction information is higher than a priority of the state release tendency information;
   determining that a priority of the information about tending to be released to an inactive state is higher than a priority of the paging restriction information, or determining that a priority of the state release tendency information is higher than a priority of the paging restriction information;
   determining to accept paging restriction information, or determining not to accept paging restriction information;
   releasing the terminal to an idle state, or releasing the terminal to an inactive state;
   deleting paging restriction information;
   sending second indication information, where the second indication information is used to indicate one of the following: accepting paging restriction information and not accepting paging restriction information; and
   sending third indication information, where the third indication information is used to indicate at least one of the following: supporting a paging restriction function and not supporting a paging restriction function.

According to a tenth aspect, an information processing apparatus is provided, where the apparatus is applied to a fourth communication device and includes:
a second obtaining module, configured to obtain third information and/or fourth information; and
a fourth execution module, configured to perform a sixth operation according to the third information and/or the fourth information, where
the third information includes at least one of the following: a leave request; paging rejection; a first NAS data packet; fourth indication information, where the fourth indication information is used to indicate that the first NAS data packet includes paging restriction information; AS paging restriction information; and information used to instruct to delete paging restriction information;
the fourth information includes at least one of the following: second indication information, where the second indication information is used to indicate one of the following: accepting paging restriction information and not accepting paging restriction information; and third indication information, where the third indication information is used to indicate at least one of the following: supporting a paging restriction function and not supporting a paging restriction function; and
the sixth operation includes at least one of the following:
   sending the first NAS data packet to a first target end;
   sending, to the first target end, the information used to instruct to delete paging restriction information;
   storing the fourth indication information;
   releasing the terminal to an idle state or releasing the terminal to a non-connected state;
   performing an operation of releasing the terminal;
   performing an operation of waiting for a period of time; and
   performing an operation of starting timing.

According to an eleventh aspect, an information processing apparatus is provided, where the apparatus is applied to a fifth communication device and includes:
a third obtaining module, configured to obtain paging restriction information or a second NAS data packet; and
a fifth execution module, configured to discard or ignore the paging restriction information, or discard or ignore the second NAS data packet, where
the second NAS data packet is a NAS data packet received together with an AS leave request or an AS paging rejection.

According to a twelfth aspect, an information processing apparatus is provided, where the apparatus is applied to a sixth communication device and includes:
a sending module, configured to send first indication information, where the first indication information is used to indicate at least one of the following: allowing the terminal to concurrently send paging restriction information when sending a NAS leave request or a NAS paging rejection; and not allowing the terminal to concurrently send paging restriction information when sending an AS leave request or an AS paging rejection.

According to a thirteenth aspect, a readable storage medium is provided. The readable storage medium stores a program or an instruction, and the program or instruction is executed by a processor to implement the steps of the method in the first aspect, or the method in the second aspect, or the method in the third aspect, or the method in the fourth aspect, or the method in the fifth aspect, or the method in the sixth aspect.

According to a fourteenth aspect, a readable storage medium is provided. The readable storage medium stores a program or an instruction, and the program or instruction is executed by a processor to implement the steps of the method in the first aspect, or the method in the second aspect, or the method in the third aspect, or the method in the fourth aspect, or the method in the fifth aspect, or the method in the sixth aspect.

According to a fifteenth aspect, a chip is provided. The chip includes a processor and a communication interface, the communication interface is coupled to the processor, and the processor is configured to run a program or an instruction to implement the steps of the method in the first aspect, or the steps of the method in the second aspect, or the steps of the method in the third aspect, or the steps of the method in the fourth aspect, or the steps of the method in the fifth aspect, or the steps of the method in the sixth aspect.

According to a sixteenth aspect, a computer program/program product is provided. The computer program/program product is stored in a non-transient storage medium, and the program/program product is executed by at least one processor to implement the steps of the method in the first aspect, or the steps of the method in the second aspect, or the steps of the method in the third aspect, or the steps of the method in the fourth aspect, or the steps of the method in the fifth aspect, or the steps of the method in the sixth aspect.

According to a seventeenth aspect, a communication device is provided, configured to perform the steps of the method in the first aspect, or the steps of the method in the second aspect, or the steps of the method in the third aspect, or the steps of the method in the fourth aspect, or the steps of the method in the fifth aspect, or the steps of the method in the sixth aspect.

In the embodiments of this application, when a terminal sends paging restriction information, UE can be released to a corresponding state (for example, an idle state) by using an initiated NAS release request/paging rejection.

### BRIEF DESCRIPTION OF DRAWINGS

FIG. 1 is a block diagram of a wireless communication system to which embodiments of this application can be applied;
FIG. 2 is a schematic flowchart of an information processing method according to an embodiment of this application;
FIG. 3 is a schematic flowchart of another information processing method according to an embodiment of this application;
FIG. 4 is a schematic flowchart of another information processing method according to an embodiment of this application;
FIG. 5 is a schematic flowchart of another information processing method according to an embodiment of this application;
FIG. 6 is a schematic flowchart of another information processing method according to an embodiment of this application;
FIG. 7 is a schematic flowchart of another information processing method according to an embodiment of this application;
FIG. 8A is a schematic flowchart of a UE release process according to Embodiment 1 of this application;
FIG. 8B is a schematic flowchart of a UE release process according to Embodiment 2 of this application;
FIG. 9A is a schematic flowchart of a UE release process according to Embodiment 3 of this application;
FIG. 9B is a schematic flowchart of a UE release process according to Embodiment 4 of this application;
FIG. 10 is a schematic flowchart of a UE release process according to Embodiment 6 of this application;
FIG. 11 is a schematic structural diagram of an information processing apparatus according to an embodiment of this application;
FIG. 12 is a schematic structural diagram of another information processing apparatus according to an embodiment of this application;
FIG. 13 is a schematic structural diagram of another information processing apparatus according to an embodiment of this application;
FIG. 14 is a schematic structural diagram of another information processing apparatus according to an embodiment of this application;
FIG. 15 is a schematic structural diagram of another information processing apparatus according to an embodiment of this application;
FIG. 16 is a schematic structural diagram of another information processing apparatus according to an embodiment of this application; and
FIG. 17 is a structural diagram of a communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

In the specification and claims of this application, the terms "first", "second", and the like are intended to distinguish between similar objects but do not describe a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

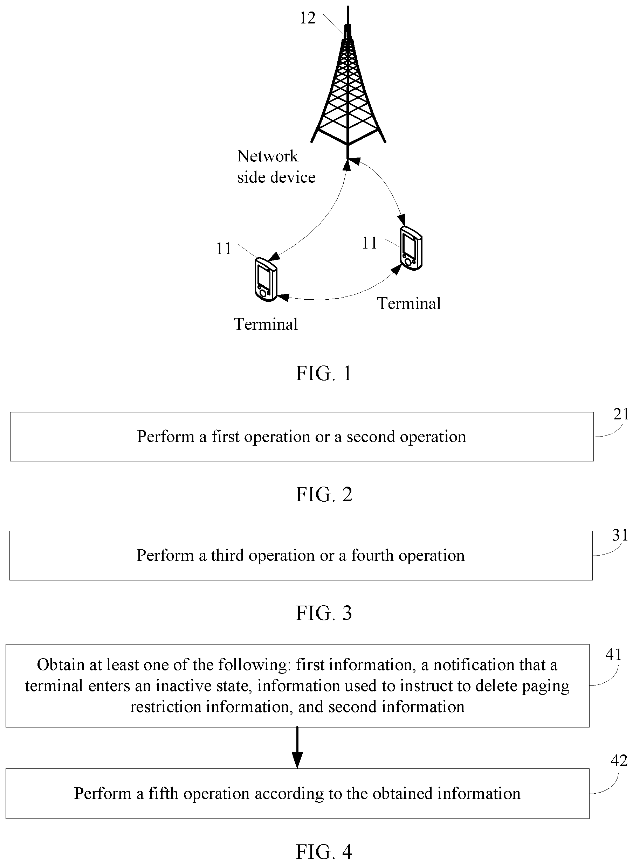

FIG. 1 is a block diagram of a wireless communication system to which embodiments of this application can be applied. The wireless communication system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VUE), or pedestrian user equipment (PUE). The wearable device includes a smartwatch, a bracelet, a headset, glasses, and the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

In an optional embodiment of this application, can may represent at least one of the following: allowing, supporting, tending to, and preferentially having a capability, and cannot may represent at least one of the following: not allowing, not supporting, not tending to, and not having a capability.

In an optional embodiment of this application, obtaining or acquiring may be understood as obtaining from a configuration, receiving, receiving through a request, obtaining through self-learning, deriving from unreceived information, or obtaining after processing based on received information. This may be specifically determined based on an actual requirement, and is not limited in the embodiments of this application. For example, when indication information of a capability sent by a device is not received, it may be deduced that the device does not support the capability.

In an optional embodiment of this application, sending may include broadcasting, broadcasting in a system message, and returning after responding to a request.

In an optional embodiment of this application, separately and independently may represent a meaning and may be interchanged.

In an optional embodiment of this application, a communication device may include at least one of the following: a communication network element and a terminal.

In an optional embodiment of this application, the communication network element may include at least one of the following: a core network element and a radio access network element.

In an optional embodiment of this application, the core network element (a CN element) may include but is not limited to at least one of the following: a core network device, a core network node, a core network function, a core network element, a mobility management entity (Mobility Management Entity, MME), an access management function (Access Management Function, AMF), a session management function (Session Management Function, SMF), a user plane function (User Plane Function, UPF), a serving gateway (serving GW, SGW), a PDN gateway (PDN Gateway, PDN gateway), a policy control function (Policy Control Function, PCF), a policy and charging rules function (Policy and Charging Rules Function, PCRF), a serving GPRS support node (Serving GPRS Support Node, SGSN), a gateway GPRS support node (Gateway GPRS Support Node, GGSN), a unified data management (Unified Data Management, UDM), a unified data repository (Unified Data Repository, UDR), a home subscriber server (Home Subscriber Server, HSS), and an application function (Application Function, AF).

In an optional embodiment of this application, a RAN network element may include but is not limited to at least one of the following: a radio access network device, a radio access network node, a radio access network function, a radio access network unit, a 3GPP radio access network, a non-3GPP radio access network, a centralized unit (Centralized Unit, CU), a distributed unit (Distributed Unit, DU), a base station, an evolved NodeB (evolved NodeB, eNB), a 5G base station (gNB), a radio network controller (Radio Network Controller, RNC), a NodeB (NodeB), a non-3GPP inter-working function (Non-3GPP Inter Working Function, N3IWF), an access controller (Access Controller, AC) node, an access point (Access Point, AP) device, a wireless local area network (Wireless Local Area Networks, WLAN) node, and an N3IWF.

In the embodiments of this application, the following problems need to be resolved:

Problem 1: In the related art, according to a network policy (policy) and capabilities of UE and a network (Network, NW), the NW may indicate a PR support to the UE. In a scenario of the PR support, the UE may send a PR to the network when sending a release request or a paging rejection.

In an optional implementation, when the UE provides a PR (paging restriction information), the network can only release the UE to a radio resource control (Radio Resource Control, RRC) idle state.

However, when the UE initiates an access stratum (Access Stratum, AS) connection release request or paging rejection, a non-access stratum (Non-Access Stratum, NAS) data packet that carries paging restriction information may be sent, but the NAS data packet is transparent to a RAN. Because the RAN cannot determine, according to the NAS data packet, whether the NAS data packet includes the paging restriction information, the RAN does not know whether the UE can be released to RRC Inactive.

In an optional embodiment of this application, the network is a mobile communication network.

In an optional embodiment of this application, a non-connected state may include at least one of the following: an idle state and an inactive state.

In an optional embodiment of this application, an operation of releasing the terminal includes releasing the terminal to a non-connected state.

In an optional embodiment of this application, the inactive state includes a radio resource control (Radio Resource Control, RRC) inactive state. The idle state includes at least one of the following: an RRC idle state and a connection management (Connection Management, CM) idle state.

In an optional embodiment of this application, a connection between the terminal and the network includes at least one of the following: an RRC connection and a non-access stratum (Non-access stratum, NAS) connection.

In an optional embodiment of this application, that the network support a paging rejection function may include at least one of the following: the network receives information that is sent by the terminal and that is used for a paging rejection; and the network performs at least one of the following according to information used for a paging rejection: stopping paging the terminal, discarding or suspending data about the terminal, and releasing a connection to the terminal.

In an optional embodiment of this application, that the terminal supports a paging rejection function may include at least one of the following: the terminal sends information used for a paging rejection to the network. It is not difficult to understand that in a case that the terminal does not intend to accept the received paging, the terminal that supports a paging rejection function may send the information used for a paging rejection to the network.

In an optional embodiment of this application, the paging rejection is information used for a paging rejection.

In an optional embodiment of this application, the paging rejection may be performed by sending a leave request (for example, a connection release request).

In an optional embodiment of this application, the paging rejection includes at least one of the following: a NAS paging rejection and an AS paging rejection.

In an optional embodiment of this application, the NAS paging rejection is a paging rejection sent by using NAS signaling. The NAS paging rejection can be understood by the CN. The NAS paging rejection is transparent to the RAN.

In an optional embodiment of this application, the AS paging rejection is a paging rejection sent by using AS signaling (for example, RRC signaling). The AS paging rejection can be understood by the RAN.

In an optional embodiment of this application, the paging restriction function includes at least one of the following: a function of restricting paging (for example, not sending the paging to the terminal), and a function of restricting data (for example, buffer or discard).

Optionally, that the terminal supports a paging restriction function includes at least one of the following: initiating a request to the network, where the request is used for one of the following: requesting to restrict paging, and request to restrict data.

The data includes control plane data and/or user plane data.

Optionally, that the network supports a paging restriction function includes at least one of the following: restricting paging according to a request of the terminal, and restricting data according to a request of the terminal.

In an optional embodiment of this application, the paging restriction information includes at least one of the following:
information used to instruct to restrict all paging, or information used to instruct to restrict all data;
information about a first data channel, where the information about the first data channel is used to indicate one of the following: restricting paging related to the first data channel, and restricting data related to the first data channel;
information about a second data channel, where the information about the second data channel is used to indicate one of the following: not restricting paging related to the second data channel, and not restricting data related to the second data channel;
information used to instruct to restrict paging other than first paging, where the first paging includes paging triggered by first data;
information used to instruct to restrict paging other than second paging, where the second paging includes paging triggered by first data and/or paging triggered by data related to the second data channel;
information used to instruct to restrict data other than the first data; and
information used to instruct to restrict data other than the second data, where
the first data includes data whose data type is a first value;
the second data includes data whose data type is a first value and/or data related to the second data channel; and
the first value includes but is not limited to at least one of the following: voice, SMS message, and control plane signaling.

In an optional embodiment of this application, a leave network function includes at least one of the following: a function of releasing a connection between the terminal and the network, and a function of configuring the terminal as a non-connected state.

Optionally, that the terminal supports a leave network function includes: initiating a leave request to the network, where the leave request is used for one of the following: requesting to leave the network, requesting to release a connection between the terminal and the network, and requesting to release the terminal to a non-connected state.

In an optional embodiment of this application, the leave request is information used for a leave request.

In an optional embodiment of this application, the leave request is also referred to as a connection release request (for example, information used for a connection release request).

In an optional embodiment of this application, the leave request includes at least one of the following: a NAS leave request and an AS leave request.

In an optional embodiment of this application, the NAS leave request is a leave request sent by using NAS signaling. The NAS leave request can be understood by the CN. The NAS leave request is transparent to the RAN.

In an optional embodiment of this application, the AS leave request is a leave request sent by using AS signaling (for example, RRC signaling). The AS leave request can be understood by the RAN.

Optionally, that the network supports a leave network function includes: releasing a connection between the terminal and the network according to a leave request of the terminal, and performing an operation of releasing the terminal or releasing the terminal to a non-connected state.

In an optional embodiment of this application, information used to instruct to request to leave the network includes at least one of the following: requesting to release a connection between the terminal and the network, and requesting to configure the terminal as a non-connected state. In an optional embodiment of this application, the operation of releasing the terminal includes: releasing the terminal to a non-connected state.

With reference to the accompanying drawings, an information processing method provided in the embodiments of this application is described in detail by using some embodiments and application scenarios thereof.

Referring to FIG. 2, FIG. 2 is a flowchart of an information processing method according to an embodiment of this application. The method is applied to a first communication device, and the first communication device includes but is not limited to a terminal (UE). As shown in FIG. 2, the method includes the following steps.

Step 21: Perform a first operation or a second operation.

Optionally, the first operation may include at least one of the following:
sending a NAS leave request to a network; and
sending a NAS paging rejection to the network.

Optionally, the sending a NAS leave request to a network includes: sending the NAS leave request to the network, and not sending an AS leave request to the network.

Optionally, the sending a NAS paging rejection to the network includes: sending the NAS paging rejection to the network, and not sending an AS paging rejection to the network.

In an implementation, the sending a NAS leave request to a network includes at least one of the following: sending NAS signaling to the network, where the NAS signaling includes indication information used for the NAS leave request.

In an implementation, the sending a NAS paging rejection request to the network includes at least one of the following: sending NAS signaling to the network, where the NAS signaling includes indication information used for the NAS paging rejection.

The NAS signaling includes at least one of the following: a service request (Service Request), a location update request (for example, Mobility Registration Request or Tracking Area Update Request), or a connection setup request (for example, Service Request).

Optionally, the second operation may include at least one of the following:
sending an AS leave request to the network
sending an AS paging rejection to the network.

Optionally, the sending an AS leave request to the network includes: sending the AS leave request to the network, and not sending a NAS leave request to the network.

Optionally, the sending an AS paging rejection to the network includes: sending the AS paging rejection to the network, and not sending a NAS paging rejection to the network.

In an implementation, the sending an AS leave request to the network includes at least one of the following: sending AS signaling to the network (for example, RRC signaling), where the AS signaling includes indication information used for the AS leave request.

In an implementation, the sending an AS paging rejection request to the network includes at least one of the following: sending AS signaling to the network, where the AS signaling includes indication information used for the AS paging rejection.

The AS signaling includes at least one of the following: a connection setup request (for example, RRC Setup Request) and a connection resume request (for example, RRC Resume Request).

In an implementation, the NAS leave request is sent to the network, which may be used to request to leave the network and/or reject paging.

In another implementation, the AS leave request is sent to the network, which may be used to request to leave the network and/or reject paging.

Optionally, the performing a first operation may include: performing the first operation in a case that a first condition is met. The first condition may include at least one of the following:
the terminal needs to send paging restriction information (including updated paging restriction information) to the network;
the terminal needs to delete paging restriction information; NAS information is sent to the network in a case that the terminal sends a leave request or a paging rejection to the network (that is, the terminal further needs to send the NAS information to the network in a case that the terminal sends the leave request or the paging rejection to the network); and
first indication information sent by the network is received, where the first indication information is used to indicate at least one of the following: allowing the terminal to concurrently send paging restriction information when sending a NAS leave request or a NAS paging rejection; and not allowing the terminal to send paging restriction information when sending an AS leave request or an AS paging rejection.

In an implementation, the allowing the terminal to concurrently send paging restriction information when sending a NAS leave request or a NAS paging rejection includes: only allowing the terminal to concurrently send the paging restriction information when sending the NAS leave request or the NAS paging rejection.

In an implementation, when the terminal needs to delete paging restriction information, the terminal sends a NAS leave request to the network. The paging restriction information to be deleted is the paging restriction information previously sent to the network. In a case that the terminal needs to delete paging restriction information, the terminal sends NAS signaling (for example, RRC signaling) of a connection setup request to the network, where the NAS signaling carries information used to indicate a leave request, but does not carry the paging restriction information.

Optionally, the performing a second operation may include: performing the second operation in a case that a second condition is met. The second condition may include at least one of the following:
the terminal tends to be released to an inactive state; and
the terminal tends to be released immediately.

In an implementation, the immediate release is that the network (for example, a RAN) returns a connection release response and/or does not return other information after receiving a leave request. For example, after receiving a NAS leave request, the network may configure a new user identifier (for example, a 5G globally unique temporary identifier (5G Globally Unique Temporary Identifier, 5G-GUTI)) for the terminal before releasing the terminal. This scenario does not belong to the immediate release.

In an optional embodiment of this application, before the step of performing a first operation or a second operation, the method further includes: receiving first indication information sent by the network, where the first indication information is used to indicate at least one of the following: allowing the terminal to concurrently send paging restriction information when sending a NAS leave request or a NAS paging rejection; and not allowing the terminal to concurrently send paging restriction information when sending an AS leave request or an AS paging rejection.

In an optional embodiment of this application, the first condition may further include at least one of the following:
the terminal needs to perform one of the following: sending a leave request and a paging rejection;
the terminal is in a multi-SIM mode;
the terminal supports and/or enables a NAS leave network function;
the network supports and/or allows the terminal to use a NAS leave network function;
the terminal supports and/or enables a NAS paging rejection function;
the network supports NAS and/or allows the terminal to use a NAS paging rejection function;
the terminal supports and/or enables a NAS paging restriction function; and
the network supports and/or allows the terminal to use a NAS paging restriction function.

Still further, that is, if a NAS related function is supported and/or enabled, the first condition may further include at least one of the following:
the terminal supports and/or enables an AS leave network function;
the network supports and/or allows the terminal to use an AS leave network function;
the terminal supports and/or enables an AS paging rejection function;
the network supports AS and/or allows the terminal to use an AS paging rejection function;
the terminal supports and/or enables an AS paging restriction function; and
the network supports and/or allows the terminal to use an AS paging restriction function.

Alternatively, the first condition may further include at least one of the following:
the terminal supports and/or enables an AS leave network function;
the network supports and/or allows the terminal to use an AS leave network function;
the terminal supports and/or enables an AS paging rejection function;
the network supports AS and/or allows the terminal to use an AS paging rejection function;
the terminal does not supports or does not enable an AS paging restriction function; and
the network does not supports or does not allow the terminal to use an AS paging restriction function.

In an optional embodiment of this application, the second condition may further include at least one of the following:
the terminal supports and/or enables an AS leave network function;
the network supports and/or allows the terminal to use an AS leave network function;
the terminal supports and/or enables an AS paging rejection function;
the network supports AS and/or allows the terminal to use an AS paging rejection function;
the terminal supports and/or enables an AS paging restriction function; and
the network supports and/or allows the terminal to use an AS paging restriction function.

Alternatively, the second condition may further include at least one of the following:
the terminal needs to perform one of the following: sending a leave request and a paging rejection;
the terminal is in a multi-SIM mode;
the terminal supports and/or enables an AS leave network function;
the network supports and/or allows the terminal to use an AS leave network function;
the terminal supports and/or enables an AS paging rejection function;
the network supports AS and/or allows the terminal to use an AS paging rejection function;
the terminal does not supports or does not enable an AS paging restriction function; and
the network does not supports or does not allow the terminal to use an AS paging restriction function.

Still further, that is, if an AS related function is supported and/or enabled, the second condition may further include at least one of the following:
the terminal supports and/or enables a NAS leave network function;
the network supports and/or allows the terminal to use a NAS leave network function;
the terminal supports and/or enables a NAS paging rejection function;
the network supports NAS and/or allows the terminal to use a NAS paging rejection function;
the terminal supports and/or enables a NAS paging restriction function; and
the network supports and/or allows the terminal to use a NAS paging restriction function.

In an implementation, when the terminal expects to send the paging restriction information, only a NAS release request/paging rejection can be initiated, but an RRC release request/paging rejection cannot be initiated.

In an implementation, the terminal is released to an idle state by using a NAS leave request. In another implementation, the terminal is released to an idle state or an inactive state by using an AS leave request.

In an implementation, the paging restriction information cannot be executed in an inactive state. Therefore, for the terminal that sends a leave request or a paging rejection request, if paging restriction information is further sent at the same time, and the paging restriction information is accepted by the network, the terminal is released to an idle state.

In an implementation, for the terminal that sends a leave request or a paging rejection request, if the terminal further carries NAS information, the terminal may select a NAS leave request. It is not difficult to understand that in a case that an RRC leave request is initiated, the RAN does not determine whether the CN needs to send downlink NAS information to the terminal after receiving the NAS information, and cannot immediately release the terminal. In this case, it is more efficient for the terminal to select the NAS leave request.

It is not difficult to understand that, in this embodiment, when a terminal sends paging restriction information, UE can be released to a corresponding state (for example, an idle state) by using an initiated NAS release request/paging rejection.

Referring to FIG. 3, FIG. 3 is a flowchart of another information processing method according to an embodiment of this application. The method is applied to a second communication device, and the second communication device includes but is not limited to a terminal (UE). As shown in FIG. 3, the method includes the following steps.

Step 31: Perform a third operation or a fourth operation.

Optionally, the third operation may include at least one of the following:
sending paging restriction information to a network; and
sending state release tendency information to the network, where the state release tendency information is used to indicate one of the following: no tendency and tending to be released to an idle state.

Optionally, the fourth operation may include at least one of the following:
sending, to the network, information used to request to be released to an inactive state;
sending state release tendency information to the network; and
sending state release tendency information to the network, where the state release tendency information is used to indicate tending to be released to an inactive state.

In an implementation, the third operation includes sending paging restriction information to a network; and the fourth operation includes sending, to the network, information used to request to be released to an inactive state, or sending state release tendency information to the network.

In another implementation, the third operation includes sending paging restriction information to a network, and sending state release tendency information to the network, where the state release tendency information is used to indicate one of the following: no tendency and tending to be released to an idle state; and the fourth operation includes sending, to the network, information used to request to be released to an inactive state, and sending state release tendency information to the network, where the state release tendency information is used to indicate tending to be released to an inactive state.

In another implementation, when the fourth operation includes sending state release tendency information to the network, the state release tendency information may be used to indicate one of the following: no tendency, tending to be released to an inactive state, and tending to be released to an idle state.

Optionally, the sending paging restriction information to a network may include: sending the paging restriction information, and not sending the information used to request to be released to an inactive state; and/or
the sending, to the network, information used to request to be released to an inactive state may include: sending the information used to request to be released to an inactive state, and not sending the paging restriction information; and/or
the sending state release tendency information may include: sending the state release tendency information, and not sending the paging restriction information.

In other words, for behavior of the UE, the paging restriction information and the information used to request to be released to an inactive state (for example, RRC Inactive) cannot be sent at the same time, and/or the paging restriction information and the state release tendency information cannot be sent at the same time.

Optionally, the performing a third operation may include: performing the third operation in a case that a third condition is met. The third condition may include at least one of the following:
the terminal needs to send paging restriction information to the network;
the terminal does not tend to be released to an inactive state;
the terminal does not have a state release tendency; and
the terminal tends to perform paging restriction on the network and the terminal tends to be released to an inactive state, but a priority of the paging restriction information is higher than a priority of the information about tending to be released to an inactive state, or a priority of the paging restriction information is higher than a priority of the state release tendency information.

In an implementation, according to user tendency information, a policy of the terminal, and/or a service state, it may be determined that the priority of the paging restriction information is higher than the priority of the information about tending to be released to an inactive state, or the priority of the paging restriction information is higher than the priority of the state release tendency information. For example, a user sets that a priority of paging restriction is higher than that of fast switching between networks of two or more SIM cards. Generally, a terminal released to an inactive state is faster than a terminal released to an idle state to restore a connection to the network. However, paging restriction may reduce a quantity of times that the terminal is paged.

Optionally, the performing a fourth operation may include: performing the fourth operation in a case that a fourth condition is met. The fourth condition may include at least one of the following:
the terminal does not need to send paging restriction information to the network;
the terminal tends to be released to an inactive state; and
the terminal tends to perform paging restriction on the network and the terminal tends to be released to an inactive state, but a priority of the paging restriction information is lower than a priority of the information about tending to be released to an inactive state, or a priority of the paging restriction information is lower than a priority of the state release tendency information.

In an implementation, according to user tendency information, a policy of the terminal, and/or a service state, it may be determined that the priority of the paging restriction information is lower than the priority of the information about tending to be released to an inactive state, or the priority of the paging restriction information is lower than the priority of the state release tendency information.

It is not difficult to understand that, in this embodiment, paging restriction information and information used to request to be released to an inactive state cannot be sent at the same time, and/or paging restriction information and state release tendency information cannot be sent at the same time, so that UE can be released to a corresponding state when paging restriction information is introduced.

Referring to FIG. 4, FIG. 4 is a flowchart of another information processing method according to an embodiment of this application. The method is applied to a third communication device, and the third communication device includes but is not limited to at least one of the following: a CN network element (for example, an AMF or an MME) and a RAN network element. As shown in FIG. 4, the method includes the following steps.

Step 41: Obtain at least one of the following: first information, a notification that the terminal enters an inactive state, information used to instruct to delete paging restriction information, and second information.

Optionally, the first information may include at least one of the following: paging restriction information, information used to request to be released to an inactive state, state release tendency information, and a terminal capability. The second information may include at least one of the following: a network policy and a network capability.

In an implementation, the first information may be obtained from the terminal.

In another implementation, the notification that the terminal enters an inactive state may be obtained from the RAN.

In another implementation, the information used to instruct to delete paging restriction information may be obtained from the RAN.

In an implementation, in a case that paging restriction information is received, one of the following information is received at the same time: a terminal leave request, and information used for a paging rejection.

In another implementation, a NAS data packet is received from the RAN network element, where the NAS data packet includes paging restriction information. Optionally, the NAS data packet does not include at least one of the following: a terminal leave request and information used for a paging rejection.

Optionally, the terminal capability may include at least one of the following: the terminal supports a paging restriction function, the terminal supports a leave network function, and the terminal supports a paging rejection function.

Optionally, the network capability may include at least one of the following: a network supports a paging restriction function, the network supports a leave network function, and the network supports a paging rejection function.

Optionally, the network policy may include at least one of the following:
a paging restriction related operation is performed on the terminal by using paging restriction information of the terminal, or paging restriction information of the terminal is not used;
paging restriction is performed on the terminal, or paging restriction is not performed on the terminal;
state release tendency information of the terminal is used, or state release tendency information of the terminal is not used;
information, of the terminal, about tending to be released to an inactive state is used, or information, of the terminal, about tending to be released to an inactive state is not used;
a priority of the paging restriction information is higher than a priority of the state release tendency information, or a priority of the paging restriction information is higher than a priority of the information about tending to be released to an inactive state; and
a priority of the information about tending to be released to an inactive state is higher than a priority of the paging restriction information, or a priority of the state release tendency information is higher than a priority of the paging restriction information.

Step 42: Perform a fifth operation according to the obtained information.

Optionally, the fifth operation may include at least one of the following:
determining that a priority of the paging restriction information is higher than a priority of the information about tending to be released to an inactive state, or determining that a priority of the paging restriction information is higher than a priority of the state release tendency information;
determining that a priority of the information about tending to be released to an inactive state is higher than a priority of the paging restriction information, or determining that a priority of the state release tendency information is higher than a priority of the paging restriction information;
determining to accept paging restriction information, or determining not to accept paging restriction information;
releasing the terminal to an idle state, or releasing the terminal to an inactive state;
deleting paging restriction information;
sending second indication information, where the second indication information is used to indicate one of the following: accepting paging restriction information and not accepting paging restriction information; and
sending third indication information, where the third indication information is used to indicate at least one of the following: supporting a paging restriction function and not supporting a paging restriction function.

In an implementation, supporting a paging restriction function in the third indication information may represent at least one of the following: the terminal supports a paging restriction function, the terminal enables a paging restriction function, the network supports a paging restriction function, and the network allows the terminal to use a paging restriction function.

In an implementation, not supporting a paging restriction function in the third indication information may represent at least one of the following: the terminal does not support a paging restriction function, the terminal does not enable a paging restriction function, the network does not support a paging restriction function, and the network does not allow the terminal to use a paging restriction function.

Optionally, the operation of determining to accept paging restriction information may include at least one of the following:
storing the paging restriction information;
releasing the terminal to an idle state; and
sending the second indication information to a RAN, where the second indication information indicates accepting paging restriction information.

Optionally, the operation of determining not to accept paging restriction information may include at least one of the following:
discarding or ignoring the paging restriction information;
instructing the RAN to release the terminal to a non-connected state (for example, an active state or an idle state);
sending the second indication information to the RAN, where the second indication information instructs not to accept paging restriction information; and
in a case that the notification that the terminal enters an inactive state is received, keeping the terminal in an inactive state.

In an implementation, that a priority of the paging restriction information is higher than a priority of the state release tendency information includes: a priority of the paging restriction information of the terminal is higher than a priority of the state release tendency information of the terminal.

In another implementation, that a priority of the state release tendency information is higher than a priority of the paging restriction information includes: a priority of the state release tendency information of the terminal is higher than a priority of the paging restriction information of the terminal.

In an implementation, a priority of the paging restriction information is higher than a priority of the information about tending to be released to an inactive state includes: a priority of the paging restriction information of the terminal is higher than a priority of the information, of the terminal, about tending to be released to an inactive state.

In another implementation, that a priority of the information about tending to be released to an inactive state is higher than a priority of the paging restriction information includes: a priority, of the terminal, of the information about tending to be released to an inactive state is higher than a priority of the paging restriction information of the terminal.

In another implementation, the information about tending to be released to an inactive state includes: information used to request to be released to an inactive state, or state release tendency information used to indicate tending to be released to an inactive state.

Optionally, the determining not to accept paging restriction information and/or releasing the terminal to an inactive state may include: in a case that a fifth condition is met, determining not to accept the paging restriction information and/or releasing the terminal to an inactive state. The fifth condition may include at least one of the following:
the first information includes paging restriction information;
the notification that the terminal enters an inactive state is received;
the first information includes one of the following: information used to request to be released to an inactive state and state release tendency information, where the state release tendency information is used to indicate tending to be released to an inactive state;
the network policy includes at least one of the following: paging restriction is not performed on the terminal, paging restriction information of the terminal is not used, the priority of the information about tending to be released to an inactive state is higher than the priority of the paging restriction information, the priority of the state release tendency information is higher than the priority of the paging restriction information, state release tendency information of the terminal is used, and information, of the terminal, about tending to be released to an inactive state is used; and
it is determined that the priority of the information about tending to be released to an inactive state is higher than the priority of the paging restriction information, or it is determined that the priority of the state release tendency information is higher than the priority of the paging restriction information.

(1) In an implementation, the fifth condition includes at least one of the following:
   the first information includes paging restriction information; and
   the network policy includes: paging restriction is not performed on the terminal, and paging restriction information of the terminal is not used.
(2) In another implementation, the fifth condition includes at least one of the following:
   the first information includes paging restriction information, and the notification that the terminal enters an inactive state is received;
   the first information includes paging restriction information and one of the following: information used to request to be released to an inactive state and state release tendency information, where the state release tendency information includes tending to be released to an inactive state;
   the network policy includes at least one of the following: paging restriction is not performed on the terminal, paging restriction information of the terminal is not used, the priority of the information about tending to be released to an inactive state is higher than the priority of the paging restriction information, and the priority of the state release tendency information is higher than the priority of the paging restriction information; and
   it is determined that the priority of the information about tending to be released to an inactive state is higher than the priority of the paging restriction information, or it is determined that the priority of the state release tendency information is higher than the priority of the paging restriction information.
(3) In another implementation, the fifth condition includes at least one of the following:
   the notification that the terminal enters an inactive state is received;
   the first information includes one of the following: information used to request to be released to an inactive state and state release tendency information, where the state release tendency information is used to indicate tending to be released to an inactive state; and
   the network policy includes at least one of the following: state release tendency information of the terminal is used, and information, of the terminal, about tending to be released to an inactive state is used.
(4) In another implementation, the fifth condition includes at least one of the following:
   a leave request or a paging rejection of the terminal is not received at the same time of receiving the paging restriction information;
   the first information includes paging restriction information, and the notification that the terminal enters an inactive state is received; and
   the first information includes paging restriction information and one of the following: information used to request to be released to an inactive state and state release tendency information, where the state release tendency information is used to indicate tending to be released to an inactive state.

It should be noted that in the implementation of (4), the fifth condition is an abnormal case, and the fifth condition needs to be discarded or ignored.

Optionally, the determining to accept paging restriction information and/or releasing the terminal to an idle state may include: in a case that a sixth condition is met, determining to accept the paging restriction information and/or releasing the terminal to an idle state. The sixth condition may include at least one of the following:
the first information includes paging restriction information;
the first information includes state release tendency information, where the state release tendency information is used to indicate tending to be released to an idle state;
the network policy includes at least one of the following: a paging restriction related operation is performed on the terminal by using paging restriction information of the terminal, paging restriction is performed on the terminal, the priority of the paging restriction information is higher than the priority of the information about tending to be released to an inactive state, the priority of the paging restriction information is higher than the priority of the state release tendency information, state release tendency information of the terminal is not used, and information, of the terminal, about tending to be released to an inactive state is not used;
it is determined that the priority of the paging restriction information is higher than the priority of the information about tending to be released to an inactive state, or it is determined that the priority of the paging restriction information is higher than the priority of the state release tendency information; and
a leave request or a paging rejection of the terminal is received at the same time of receiving the paging restriction information.

Alternatively, the sixth condition may include at least one of the following:
the first information includes paging restriction information, and the notification that the terminal enters an inactive state is received;
the first information includes paging restriction information and one of the following: information used to request to be released to an inactive state and state release tendency information, where the state release tendency information is used to indicate tending to be released to an inactive state;
the network policy includes at least one of the following: a paging restriction related operation is performed on the terminal by using paging restriction information of the terminal, paging restriction is performed on the terminal, the priority of the paging restriction information is higher than the priority of the information about tending to be released to an inactive state, and the priority of the paging restriction information is higher than the priority of the state release tendency information; and
it is determined that the priority of the paging restriction information is higher than the priority of the information about tending to be released to an inactive state, or it is determined that the priority of the paging restriction information is higher than the priority of the state release tendency information.

(1) In an implementation, the sixth condition includes at least one of the following:
   the first information includes paging restriction information;
   the network policy includes: a paging restriction related operation is performed on the terminal by using paging restriction information of the terminal;
   the first information includes state release tendency information, where the state release tendency information includes tending to be released to an idle state; and
   it is determined that the priority of the paging restriction information is higher than the priority of the information about tending to be released to an inactive state, or it is determined that the priority of the paging restriction information is higher than the priority of the state release tendency information.
(2) In another implementation, the sixth condition includes at least one of the following:
   the first information includes paging restriction information, and the notification that the terminal enters an inactive state is received;
   the first information includes paging restriction information and one of the following: information used to request to be released to an inactive state and state release tendency information, where the state release tendency information includes tending to be released to an inactive state;
   the network policy includes at least one of the following: a paging restriction related operation is performed on the terminal by using paging restriction information of the terminal, the priority of the paging restriction information is higher than the priority of the information about tending to be released to an inactive state, and the priority of the paging restriction information is higher than the priority of the state release tendency information; and
   it is determined that the priority of the paging restriction information is higher than the priority of the information about tending to be released to an inactive state, or it is determined that the priority of the paging restriction information is higher than the priority of the state release tendency information.

In this embodiment of this application, the method may further include: subscribing to the notification that the terminal enters an inactive state from a RAN. For example, before the step of receiving the notification that the terminal enters an inactive state, the notification that the terminal enters an inactive state is subscribed to from the RAN.

Optionally, the subscribing to the notification that the terminal enters an inactive state from a RAN may include: in a case that a seventh condition is met, subscribing to the notification that the terminal enters an inactive state from the RAN. The seventh condition may include at least one of the following:
the terminal supports a paging restriction function;
the network supports and/or allows the terminal to use a paging restriction function; and
the network policy includes at least one of the following: a paging restriction related operation is performed on the terminal by using paging restriction information of the terminal, paging restriction is performed on the terminal, the priority of the paging restriction information is higher than the priority of the information about tending to be released to an inactive state, and the priority of the paging restriction information is higher than the priority of the state release tendency information.

Optionally, the operation of deleting paging restriction information includes: in a case that an eighth condition is met, performing the operation of deleting the paging restriction information. The eighth condition may include at least one of the following:
information used to instruct to delete paging restriction information is received; and
a context of the terminal stores information about paging restriction information.

In an implementation, when it is determined to accept the paging restriction information, at least one of the following may be performed: storing the paging restriction information; performing the operation of releasing the UE to an idle state (for example, sending a UE context release command to the RAN); and sending the second indication information to the RAN, to instruct to accept the paging restriction information.

In an implementation, when it is determined not to accept the paging restriction information, at least one of the following may be performed: discarding or ignoring the paging restriction information; sending the second indication information to the RAN, to instruct not to accept the paging restriction information; and instructing the RAN to release the terminal to a non-connected state.

It is not difficult to understand that, in this embodiment, the UE can be released to a corresponding state when the UE sends the paging restriction information.

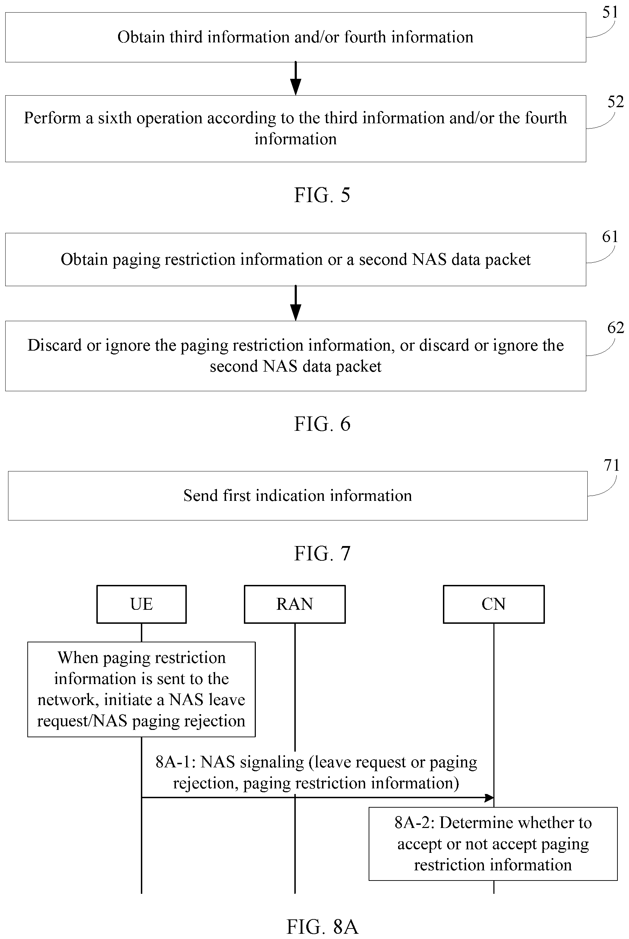

Referring to FIG. 5, FIG. 5 is a flowchart of another information processing method according to an embodiment of this application. The method is applied to a fourth communication device, and the fourth communication device includes but is not limited to a RAN network element. As shown in FIG. 5, the method includes the following steps.

Step 51: Obtain third information and/or fourth information.

Optionally, the third information may include at least one of the following: a leave request (for example, an AS leave request); paging rejection (for example, AS paging rejection); a first NAS data packet; fourth indication information, where the fourth indication information is used to indicate that the first NAS data packet includes paging restriction information; AS paging restriction information; and information used to instruct to delete paging restriction information.

Optionally, the fourth information includes at least one of the following: second indication information, where the second indication information is used to indicate one of the following: accepting paging restriction information and not accepting paging restriction information; and third indication information, where the third indication information is used to indicate at least one of the following: supporting a paging restriction function and not supporting a paging restriction function.

Optionally, the first NAS data packet is a NAS data packet received together with an AS leave request or an AS paging rejection.

Step 52: Perform a sixth operation according to the third information.

Optionally, the sixth operation may include at least one of the following:
sending the first NAS data packet to a first target end;
sending, to the first target end, the information used to instruct to delete paging restriction information;
storing the fourth indication information;
releasing the terminal to an idle state or releasing the terminal to a non-connected state;
performing an operation of releasing the terminal;
performing an operation of waiting for a period of time; and
performing an operation of starting timing.

In an implementation, the fourth information is obtained from a CN.

In an implementation, the third information is obtained from the terminal.

Optionally, the sending, to the first target end, the information used to instruct to delete paging restriction information includes: in a case that a ninth condition is met, sending, to the first target end, the information used to instruct to delete paging restriction information. The ninth condition may include at least one of the following:
the third information includes the leave request (for example, an AS leave request) or the paging rejection (for example, AS paging rejection);
the third information includes the information used to instruct to delete paging restriction information;
the third information does not include the first NAS data packet and/or the fourth indication information; and
the third information does not include the AS paging restriction information or any information related to paging restriction information.

In an implementation, when the terminal initiates a leave request or a paging rejection, and any information related to paging restriction information is not included, it indicates that the terminal expects to delete the paging restriction information.

In an implementation, the operation of releasing the terminal can release the terminal to one of the following states: an inactive state and an idle state.

In an implementation, the operation of waiting for a period of time or the operation of starting timing may be performed according to a first time period or first duration. The first time period may be a preset time period or an obtained time period configuration. The first duration may be preset duration, or an obtained duration configuration.

Optionally, the releasing the terminal to an idle state includes: in a case that a tenth condition is met, releasing the terminal to an idle state. The tenth condition may include at least one of the following:
the first NAS data packet is received;
the first NAS data packet and an AS leave request are received;
the first NAS data packet and an AS paging rejection are received;
the first NAS data packet and the fourth indication information are received, that is, the fourth indication information is used to directly indicate that the first NAS data packet includes paging restriction information;
the AS paging restriction information is received;
in a case that paging restriction information is received, a context of the terminal includes the second indication information or the second indication information is received, where the second indication information indicates accepting paging restriction information; and
in a case that paging restriction information is received, the context of the terminal includes the third indication information or the third indication information is received, where the second indication information indicates supporting a paging restriction function.

Optionally, the performing an operation of releasing the terminal may include: in a case that an eleventh condition is met, performing the operation of releasing the terminal.

The eleventh condition includes at least one of the following:
paging restriction information is not received;
in a case that paging restriction information is received, a context of the terminal includes the second indication information or the second indication information is received, where the second indication information indicates not accepting paging restriction information; and
in a case that paging restriction information is received, the context of the terminal includes the third indication information or the third indication information is received, where the second indication information indicates not supporting a paging restriction function.

In an implementation, it is determined, through one of the following, that the paging restriction information is received: the first NAS data packet is received and/or the fourth indication information is received, or the AS paging restriction information is received.

Optionally, the performing an operation of releasing the terminal further includes: in a case that the terminal is released to an inactive state, notifying a second target end that the terminal enters an inactive state.

Optionally, the performing an operation of waiting for a period of time may include at least one of the following:
starting waiting when the first NAS data packet or paging restriction information is sent to the first target end, or starting waiting when first information is received;
before the waiting expires, in a case that a release request of a third target end is received, stopping waiting and performing, according to the release request, the operation of releasing the terminal;
before the waiting expires, in a case that a NAS data packet sent by the third target end is received, sending the received NAS data packet to the terminal;
before the waiting expires, in a case that second indication information sent by the third target end is received, stopping waiting, and performing, according to the second indication information, the operation of releasing the terminal; and
after the waiting expires, performing the operation of releasing the terminal.

In an implementation, the performing the operation of releasing the terminal after the waiting expires includes: after the waiting expires, in a case that the release request of the third target end is not received, performing the operation of releasing the terminal.

Optionally, the performing an operation of starting timing may include at least one of the following:
starting timing when the first NAS data packet or paging restriction information is sent to the first target end, or starting timing when first information is received;
before the timing expires, in a case that a release request of a third target end is received, stopping waiting, and performing, according to the release request, the operation of releasing the terminal;
before the timing expires, in a case that a NAS data packet sent by the third target end is received, sending the received NAS data packet to the terminal; and
after the timing expires, performing the operation of releasing the terminal, where
the paging restriction information is generated according to the AS paging restriction information.

In an implementation, the performing the operation of releasing the terminal after the timing expires includes: after the timing expires, in a case that the release request of the third target end is not received, performing the operation of releasing the terminal.

In an implementation, the first target end, the second target end, and the third target end may be the same, including a CN (for example, an AMF).

It is not difficult to understand that, in this embodiment, the UE can be released to a corresponding state when the UE sends the paging restriction information.

Referring to FIG. 6, FIG. 6 is a flowchart of another information processing method according to an embodiment of this application. The method is applied to a fifth communication device, and the fifth communication device includes but is not limited to a CN network element (for example, an AMF or an MME) and a RAN network element. As shown in FIG. 6, the method includes the following steps.

Step 61: Obtain paging restriction information or a second NAS data packet.

Step 62: Discard or ignore the paging restriction information, or discard or ignore the second NAS data packet.

The second NAS data packet is a NAS data packet received together with an AS leave request or an AS paging rejection.

In an implementation, the fifth communication device is a RAN network element, and the RAN network element may not support or may not allow the terminal to send the paging restriction information together with the AS leave request or the AS paging rejection. Therefore, the second NAS packet may be directly discarded or ignored.

In another implementation, the fifth communication device is a CN network element, and the CN network element may not support or may not allow the terminal to send the paging restriction information together with the AS leave request or the AS paging rejection. Therefore, the paging restriction information received by the RAN is directly discarded or ignored.

Optionally, the discarding or ignoring the paging restriction information may include: discarding or ignoring the paging restriction information in a case that a twelfth condition is met.

The twelfth condition may include at least one of the following:
when the paging restriction information is received, there is no concurrently received leave request or paging rejection; and
the paging restriction information is received from a RAN.

It is not difficult to understand that, in this embodiment, the UE can be released to a corresponding state when the UE sends the paging restriction information.

Referring to FIG. 7, FIG. 7 is a flowchart of another information processing method according to an embodiment of this application. The method is applied to a sixth communication device, and the sixth communication device includes but is not limited to a CN network element (for example, an AMF or an MME). As shown in FIG. 7, the method includes the following steps.

Step 71: Send first indication information.

The first indication information is used to indicate at least one of the following: allowing the terminal to concurrently send paging restriction information when sending a NAS leave request or a NAS paging rejection; and not allowing the terminal to concurrently send paging restriction information when sending an AS leave request or an AS paging rejection.

In an implementation, the allowing the terminal to concurrently send paging restriction information when sending a NAS leave request or a NAS paging rejection includes: "only" allowing the terminal to concurrently send the paging restriction information when sending the NAS leave request or the NAS paging rejection.

In an implementation, an AMF or an MME may send the first indication information to the terminal.

Optionally, the sending first indication information may include: sending the first indication information in a case that a thirteenth condition is met. The thirteenth condition may include at least one of the following:
the terminal supports a NAS leave network function;
a network supports and/or allows the terminal to use a NAS leave network function;
the terminal supports a NAS paging rejection function;
the network supports NAS and/or allows the terminal to use a NAS paging rejection function;
the terminal supports a NAS paging restriction function; and
the network supports and/or allows the terminal to use a NAS paging restriction function.

It is not difficult to understand that, in this embodiment, when a terminal sends paging restriction information, UE can be released to a corresponding state (for example, an idle state) by using an initiated NAS release request/paging rejection.

This application is described below with reference to the specific embodiments.

### Embodiment 1

In Embodiment 1, as shown in FIG. 8A, when UE expects to send paging restriction information to a network or to delete paging restriction information, the UE can only initiate a NAS release request/paging rejection without initiating an RRC release request/paging rejection. A related UE release process may include:
Step 8A-1: When UE sends paging restriction information to a network, the UE sends paging restriction information to a CN (hereinafter described by using an AMF as an example) at the same time of sending a NAS leave request or a NAS paging rejection.

When the UE needs to delete the paging restriction information, the UE does not carry any paging restriction information at the same time of sending the NAS leave request or the NAS paging rejection.

Step 8A-2: The AMF determines, according to a network policy, a terminal capability, and/or a network capability, to accept or not accept the paging restriction information.

In a case that it is determined not to accept the paging restriction information, a RAN may be required to release the UE to a non-connected state (for example, an inactive state or an idle state), or may perform a related operation of releasing the UE to an idle state (for example, sending a UE context release command to a RAN).

In a case that it is determined to accept the paging restriction information, a related operation of releasing the UE to an idle state may be performed (for example, sending a UE context release command to a RAN).

### Embodiment 2

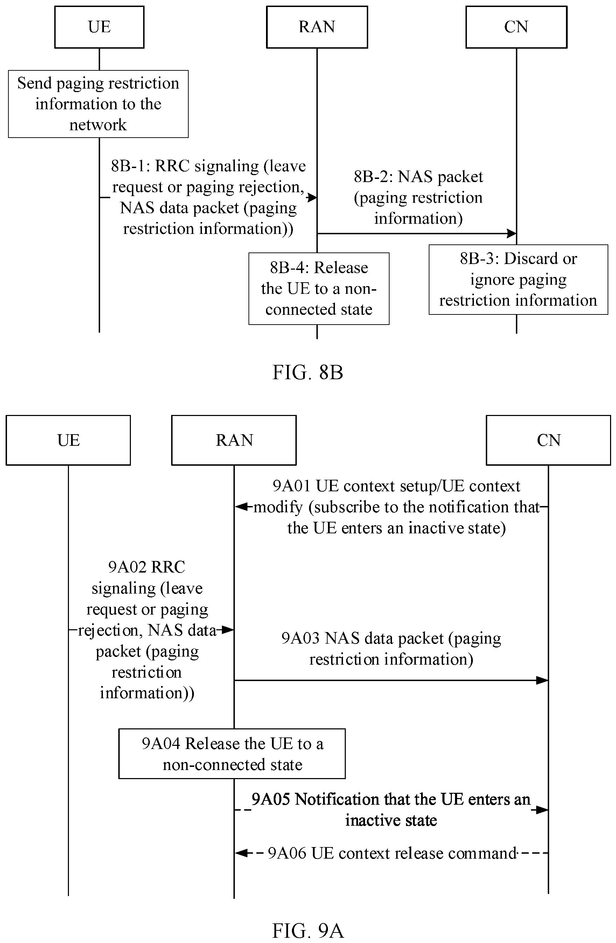

In Embodiment 2, as shown in FIG. 8B, a related UE release process may include:
Step 8B-1: When UE expects to send paging restriction information, the UE initiates an AS release request/paging rejection to a RAN, and send, to the RAN, a NAS data packet that carries the paging restriction information. In an implementation, 8A-1 is a normal operation, and 8B-1 is an abnormal operation of the UE.
Step 8B-2: The RAN forwards, to a serving AMF, the NAS data packet that carries the paging restriction information, or the RAN directly discards or ignores the NAS packet.
Step 8B-3: The AMF "separately", receives the paging restriction information from the RAN that is, discards or ignores the paging restriction information when receiving the paging restriction information without the NAS release request/NAS paging rejection. It is not difficult to understand that, in an implementation, the operation is an abnormal operation of the UE, and the paging restriction information is discarded.
Step 8B-4: After forwarding the NAS data packet to the serving AMF, the RAN may release the UE to a non-connected state (for example, an idle state or an inactive state).

### Embodiment 3

In Embodiment 3, as shown in FIG. 9A, a related UE release process may include:
Step 9A01: For UE that supports paging restriction information, a CN (hereinafter described by using an AMF as an example) subscribes to a notification that the UE enters an inactive state (for example, a RRC Inactive notification) from a RAN (for example, an NG RAN), for example, subscribing to a UE context create or UE context modify command.
Step 9A02: The UE sends an RRC leave request or an RRC paging rejection to the RAN, and may further carry a NAS data packet that includes the paging restriction information.
Step 9A03: The RAN forwards the NAS data packet to the AMF.
Step 9A04: The RAN releases the UE to a non-connected state (for example, an idle state or an inactive state), so that the RAN releases the UE as soon as possible.
Step 9A05: If the UE is released to an inactive state, notify the AMF.

The AMF determines, according to the received paging restriction information, whether to accept the paging restriction information.

When it is determined to accept the paging restriction information, the paging restriction information may be stored.

When it is determined to accept the paging restriction information and the notification that the UE enters an inactive state is received, an operation of releasing the UE to an idle state may be performed, for example, a UE context release command is sent to the RAN, as shown in step 9A06.

When it is determined not to accept the paging restriction information, the paging restriction information may be discarded or ignored.

When it is determined not to accept the paging restriction information and the notification that the UE enters an inactive state is received, the UE may be kept in an inactive state.

### Embodiment 4

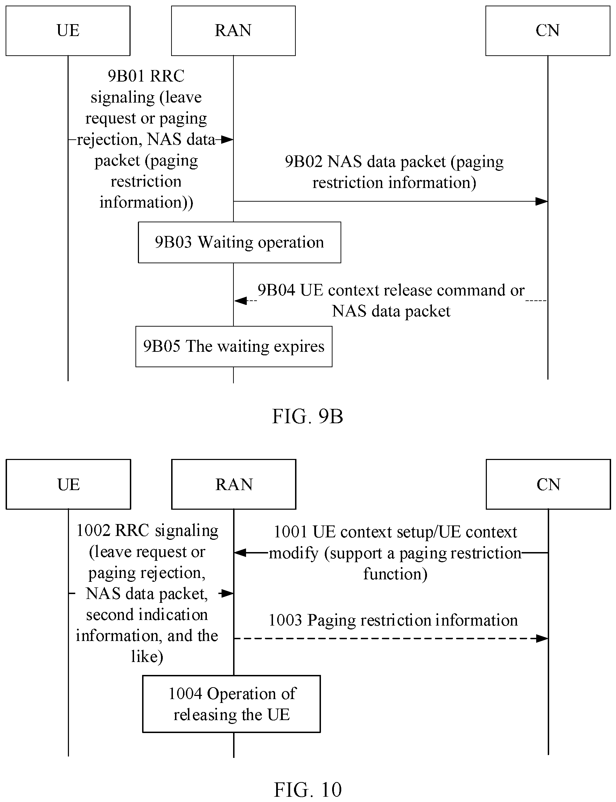

In Embodiment 4, as shown in FIG. 9B, a related UE release process may include:
Step 9B01: UE sends an RRC leave request or an RRC paging rejection to a RAN, and may further carry a NAS data packet that includes paging restriction information.
Step 9B02: The RAN forwards the received NAS data packet to a CN.
Step 9B03: The RAN performs an operation of waiting for a period of time, which is specifically described in FIG. 5.
Step 9B04: After receiving the paging restriction information, the CN (hereinafter described by using an AMF as an example) determines whether to accept the paging restriction information.

The AMF determines, according to the received paging restriction information, whether to accept the paging restriction information.

When it is determined to accept the paging restriction information, at least one of the following may be performed: storing the paging restriction information; performing the operation of releasing the UE to an idle state (for example, sending a UE context release command to the RAN, as shown in step 9B05); and sending second indication information to the RAN, to instruct to accept the paging restriction information.

When it is determined not to accept the paging restriction information, at least one of the following may be performed: discarding or ignoring the paging restriction information; sending second indication information to the RAN, to instruct not to accept the paging restriction information; and instructing the RAN to release the terminal to a non-connected state.

Before the waiting expires, the RAN receives the UE context release command sent by the CN, stops waiting, and releases the UE according to the UE context release command.

Before the waiting expires, the RAN receives the information that is sent by the CN and that is used to instruct to accept or not accept the paging restriction information, and stops waiting. Further, in a case that third indication information instructs to accept the paging restriction information, the terminal is released to an idle state.

Further, in a case that the second indication information instructs to accept the paging restriction information, the terminal is released to an idle state.

Further, in a case that the second indication information instructs not to accept the paging restriction information, the terminal is released to a non-connected state (that is, an idle state or an inactive state).

Step 9B04: In a case that the waiting expires, release the terminal to a non-connected state (that is, an idle state or an inactive state).

### Embodiment 5

In Embodiment 5, for behavior of UE, paging restriction information and information used to request to be released to an inactive state (for example, RRC Inactive) cannot be sent at the same time, and/or paging restriction information and state release tendency information cannot be sent at the same time. For example, when the UE expects to be released to an inactive state, the paging restriction information cannot be sent. However, if the UE is abnormal, and the RAN simultaneously receives the paging restriction information and the inactive state tendency information, the RAN may determine, according to a network policy, a terminal capability, and/or a network capability, not to accept the paging restriction information (for example, discarding or ignoring the paging restriction information) and allow the UE to enter an inactive state, or forward the paging restriction information and release the UE to an idle state (for example, an RRC idle state).

### Embodiment 6

In Embodiment 6, as shown in FIG. 10, a related UE release process may include:
Step 1001: A CN sends a UE context setup command message or a UE context modify command message to a RAN.

The message includes third indication information used to indicate at least one of the following: supporting a paging restriction function and not supporting a paging restriction function.

Step 1002: UE sends an RRC leave request or an RRC paging rejection to the RAN, and may further carry a NAS data packet including paging restriction information or RRC paging restriction information (that is, paging restriction information that can be understood by the RAN) and/or fourth indication information (indicating that the NAS data packet includes the paging restriction information).

Step 1003: The RAN forwards the received NAS data packet or paging restriction information to the CN.

Step 1004: The RAN releases the UE according to the received information.

In a case that the third indication information indicates that the paging restriction function is supported, and the paging restriction information is received, the terminal is released to an idle state.

In a case that the third indication determines that the paging restriction function is not supported or the paging restriction information is not received, the terminal is released to a non-connected state (that is, an idle state or an inactive state).

It should be noted that the information processing method provided in the embodiments of this application may be performed by an information processing apparatus, or a control module that is in the information processing apparatus and that is configured to perform the information processing method. In the embodiments of this application, that the information processing apparatus performs the information processing method is used as an example to describe the information processing apparatus provided in the embodiments of this application.

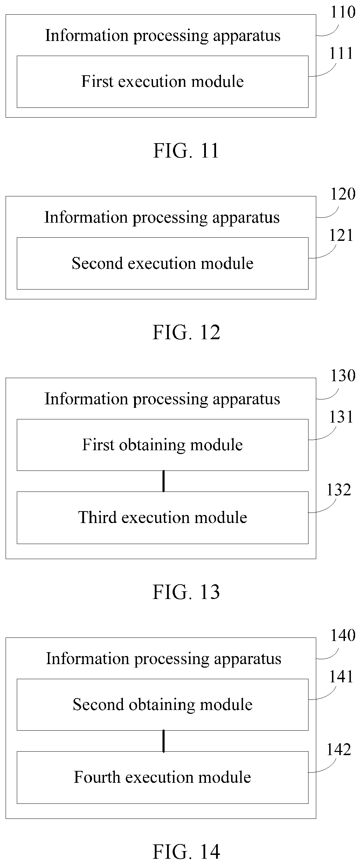

Referring to FIG. 11, FIG. 11 is a schematic structural diagram of an information processing apparatus according to an embodiment of this application. The apparatus is applied to a first communication device. As shown in FIG. 11, an information processing apparatus 110 includes a first execution module 111, configured to perform a first operation or a second operation, where
the first operation includes at least one of the following:
sending a NAS leave request to a network, and sending a NAS paging rejection to the network; and
the second operation includes at least one of the following:
   sending an AS leave request to the network, and sending an AS paging rejection to the network.

Optionally, the performing a first operation includes:
performing the first operation in a case that a first condition is met, where
the first condition includes at least one of the following:
   the terminal needs to send paging restriction information to the network;
   the terminal needs to delete paging restriction information;
   NAS information is sent to the network in a case that the terminal sends a leave request or a paging rejection to the network; and
   first indication information sent by the network is received, where the first indication information is used to indicate at least one of the following: allowing the terminal to concurrently send paging restriction information when sending a NAS leave request or a NAS paging rejection; and not allowing the terminal to send paging restriction information when sending an AS leave request or an AS paging rejection.

Optionally, the performing a second operation includes:
performing the second operation in a case that a second condition is met, where
the second condition includes at least one of the following:
   the terminal tends to be released to an inactive state; and
   the terminal tends to be released immediately.

Optionally, before the step of performing a first operation or a second operation, the method further includes:
receiving first indication information sent by the network, where the first indication information is used to indicate at least one of the following: allowing the terminal to concurrently send paging restriction information when sending a NAS leave request or a NAS paging rejection; and not allowing the terminal to concurrently send paging restriction information when sending an AS leave request or an AS paging rejection.

In this embodiment of this application, the information processing apparatus 110 can implement the processes implemented in the method embodiment in FIG. 2 of this application, and achieve a same technical effect. To avoid repetition, details are not described herein again.

Referring to FIG. 12, FIG. 12 is a schematic structural diagram of another information processing apparatus according to an embodiment of this application. The apparatus is applied to a second communication device. As shown in FIG. 12, an information processing apparatus 120 includes:
a second execution module 121, configured to perform a third operation or a fourth operation, where
the third operation includes at least one of the following:
   sending paging restriction information to a network; and
   sending state release tendency information to the network, where the state release tendency information is used to indicate one of the following: no tendency and tending to be released to an idle state; and
   the fourth operation includes at least one of the following:
      sending, to the network, information used to request to be released to an inactive state;
      sending state release tendency information to the network; and
      sending state release tendency information to the network, where the state release tendency information is used to indicate tending to be released to an inactive state.

Optionally, the sending paging restriction information to a network includes: sending the paging restriction information, and not sending the information used to request to be released to an inactive state; and/or
the sending, to the network, information used to request to be released to an inactive state includes: sending the information used to request to be released to an inactive state, and not sending the paging restriction information; and/or
the sending state release tendency information includes: sending the state release tendency information, and not sending the paging restriction information.

Optionally, when the fourth operation includes sending state release tendency information to the network, the state release tendency information is used to indicate one of the following: no tendency, tending to be released to an inactive state, and tending to be released to an idle state.

Optionally, the performing a third operation includes:
performing the third operation in a case that a third condition is met, where
the third condition includes at least one of the following:
   the terminal needs to send paging restriction information to the network;
   the terminal does not tend to be released to an inactive state;
   the terminal does not have a state release tendency; and
   the terminal tends to perform paging restriction on the network and the terminal tends to be released to an inactive state, but a priority of the paging restriction information is higher than a priority of the information about tending to be released to an inactive state, or a priority of the paging restriction information is higher than a priority of the state release tendency information.

Optionally, the performing a fourth operation includes:
performing the fourth operation in a case that a fourth condition is met, where
the fourth condition includes at least one of the following:
   the terminal does not need to send paging restriction information to the network;
   the terminal tends to be released to an inactive state; and
   the terminal tends to perform paging restriction on the network and the terminal tends to be released to an inactive state, but a priority of the paging restriction information is lower than a priority of the information about tending to be released to an inactive state, or a priority of the paging restriction information is lower than a priority of the state release tendency information.

In this embodiment of this application, the information processing apparatus 120 can implement the processes implemented in the method embodiment in FIG. 3 of this application, and achieve a same technical effect. To avoid repetition, details are not described herein again.

Referring to FIG. 13, FIG. 13 is a schematic structural diagram of another information processing apparatus according to an embodiment of this application. The apparatus is applied to a third communication device. As shown in FIG. 13, an information processing apparatus 130 includes:
a first obtaining module 131, configured to obtain at least one of the following: first information, a notification that the terminal enters an inactive state, information used to instruct to delete paging restriction information, and second information; and
a third execution module 132, configured to perform a fifth operation according to the obtained information, where
the first information includes at least one of the following: paging restriction information, information used to request to be released to an inactive state, state release tendency information, and a terminal capability; and the second information includes at least one of the following: a network policy and a network capability; and
the fifth operation includes at least one of the following:
   determining that a priority of the paging restriction information is higher than a priority of the information about tending to be released to an inactive state, or determining that a priority of the paging restriction information is higher than a priority of the state release tendency information;
   determining that a priority of the information about tending to be released to an inactive state is higher than a priority of the paging restriction information, or determining that a priority of the state release tendency information is higher than a priority of the paging restriction information;
   determining to accept paging restriction information, or determining not to accept paging restriction information;
   releasing the terminal to an idle state, or releasing the terminal to an inactive state;
   deleting paging restriction information;
   sending second indication information, where the second indication information is used to indicate one of the following: accepting paging restriction information and not accepting paging restriction information; and
   sending third indication information, where the third indication information is used to indicate at least one of the following: supporting a paging restriction function and not supporting a paging restriction function.

Optionally, the terminal capability includes at least one of the following: the terminal supports a paging restriction function, the terminal supports a leave network function, and the terminal supports a paging rejection function; and/or
the network capability includes at least one of the following: a network supports a paging restriction function, the network supports a leave network function, and the network supports a paging rejection function; and/or
the network policy includes at least one of the following:
   a paging restriction related operation is performed on the terminal by using paging restriction information of the terminal, or paging restriction information of the terminal is not used;
   paging restriction is performed on the terminal, or paging restriction is not performed on the terminal;
   state release tendency information of the terminal is used, or state release tendency information of the terminal is not used;
   information, of the terminal, about tending to be released to an inactive state is used, or information, of the terminal, about tending to be released to an inactive state is not used;
   a priority of the paging restriction information is higher than a priority of the state release tendency information, or a priority of the paging restriction information is higher than a priority of the information about tending to be released to an inactive state; and
   a priority of the information about tending to be released to an inactive state is higher than a priority of the paging restriction information, or a priority of the state release tendency information is higher than a priority of the paging restriction information; and/or
   the determining to accept paging restriction information includes at least one of the following:
      storing the paging restriction information;
      releasing the terminal to an idle state; and
      sending the second indication information to a RAN, where the second indication information indicates accepting paging restriction information; and/or
      the determining not to accept paging restriction information includes at least one of the following:
         discarding or ignoring the paging restriction information;
         instructing the RAN to release the terminal to a non-connected state;
         sending the second indication information to the RAN, where the second indication information instructs not to accept paging restriction information; and
         in a case that the notification that the terminal enters an inactive state is received, keeping the terminal in an inactive state.

Optionally, the determining not to accept paging restriction information and/or releasing the terminal to an inactive state includes:
in a case that a fifth condition is met, determining not to accept the paging restriction information and/or releasing the terminal to an inactive state, where
the fifth condition includes at least one of the following:
   the first information includes paging restriction information;
   the notification that the terminal enters an inactive state is received;
   the first information includes one of the following: information used to request to be released to an inactive state and state release tendency information, where the state release tendency information is used to indicate tending to be released to an inactive state;
   the network policy includes at least one of the following: paging restriction is not performed on the terminal, paging restriction information of the terminal is not used, the priority of the information about tending to be released to an inactive state is higher than the priority of the paging restriction information, the priority of the state release tendency information is higher than the priority of the paging restriction information, state release tendency information of the terminal is used, and information, of the terminal, about tending to be released to an inactive state is used; and
   it is determined that the priority of the information about tending to be released to an inactive state is higher than the priority of the paging restriction information, or it is determined that the priority of the state release tendency information is higher than the priority of the paging restriction information.

Optionally, the determining to accept paging restriction information and/or releasing the terminal to an idle state includes:
in a case that a sixth condition is met, determining to accept the paging restriction information and/or releasing the terminal to an idle state, where
the sixth condition includes at least one of the following:
   the first information includes paging restriction information;
   the first information includes state release tendency information, where the state release tendency information is used to indicate tending to be released to an idle state;
   the network policy includes at least one of the following: a paging restriction related operation is performed on the terminal by using paging restriction information of the terminal, paging restriction is performed on the terminal, the priority of the paging restriction information is higher than the priority of the information about tending to be released to an inactive state, the priority of the paging restriction information is higher than the priority of the state release tendency information, state release tendency information of the terminal is not used, and information, of the terminal, about tending to be released to an inactive state is not used;
   it is determined that the priority of the paging restriction information is higher than the priority of the information about tending to be released to an inactive state, or it is determined that the priority of the paging restriction information is higher than the priority of the state release tendency information; and
   a leave request or a paging rejection of the terminal is received at the same time of receiving the paging restriction information.

Optionally, the determining to accept paging restriction information and/or releasing the terminal to an idle state includes:
in a case that a sixth condition is met, determining to accept the paging restriction information and/or releasing the terminal to an idle state, where
the sixth condition includes at least one of the following:
   the first information includes paging restriction information, and the notification that the terminal enters an inactive state is received;
   the first information includes paging restriction information and one of the following: information used to request to be released to an inactive state and state release tendency information, where the state release tendency information is used to indicate tending to be released to an inactive state;
   the network policy includes at least one of the following: a paging restriction related operation is performed on the terminal by using paging restriction information of the terminal, paging restriction is performed on the terminal, the priority of the paging restriction information is higher than the priority of the information about tending to be released to an inactive state, and the priority of the paging restriction information is higher than the priority of the state release tendency information; and
   it is determined that the priority of the paging restriction information is higher than the priority of the information about tending to be released to an inactive state, or it is determined that the priority of the paging restriction information is higher than the priority of the state release tendency information.

Optionally, the method further includes:
in a case that a seventh condition is met, subscribing to the notification that the terminal enters an inactive state from a RAN, where
the seventh condition includes at least one of the following:
   the terminal supports a paging restriction function;
   the network supports and/or allows the terminal to use a paging restriction function; and
   the network policy includes at least one of the following: a paging restriction related operation is performed on the terminal by using paging restriction information of the terminal, paging restriction is performed on the terminal, the priority of the paging restriction information is higher than the priority of the information about tending to be released to an inactive state, and the priority of the paging restriction information is higher than the priority of the state release tendency information.

Optionally, the deleting paging restriction information includes:
in a case that an eighth condition is met, deleting the paging restriction information, where
the eighth condition includes at least one of the following:
   information used to instruct to delete paging restriction information is received; and
   a context of the terminal stores information about paging restriction information.

In this embodiment of this application, the information processing apparatus 130 can implement the processes implemented in the method embodiment in FIG. 4 of this application, and achieve a same technical effect. To avoid repetition, details are not described herein again.

Referring to FIG. 14, FIG. 14 is a schematic structural diagram of another information processing apparatus according to an embodiment of this application. The apparatus is applied to a fourth communication device. As shown in FIG. 14, an information processing apparatus 140 includes:
a second obtaining module 141, configured to obtain third information and/or fourth information; and
a fourth execution module 142, configured to perform a sixth operation according to the third information and/or the fourth information, where
the third information includes at least one of the following: a leave request; paging rejection; a first NAS data packet; fourth indication information, where the fourth indication information is used to indicate that the first NAS data packet includes paging restriction information; AS paging restriction information; and information used to instruct to delete paging restriction information;
the fourth information includes at least one of the following: second indication information, where the second indication information is used to indicate one of the following: accepting paging restriction information and not accepting paging restriction information; and third indication information, where the third indication information is used to indicate at least one of the following: supporting a paging restriction function and not supporting a paging restriction function; and
the sixth operation includes at least one of the following:
   sending the first NAS data packet to a first target end;
   sending, to the first target end, the information used to instruct to delete paging restriction information;
   storing the fourth indication information;
   releasing the terminal to an idle state or releasing the terminal to a non-connected state;
   performing an operation of releasing the terminal;
   performing an operation of waiting for a period of time; and
   performing an operation of starting timing.

Optionally, the sending, to the first target end, the information used to instruct to delete paging restriction information includes:
in a case that a ninth condition is met, sending, to the first target end, the information used to instruct to delete paging restriction information, where
the ninth condition includes at least one of the following:
   the third information includes the leave request or the paging rejection;
   the third information includes the information used to instruct to delete paging restriction information;
   the third information does not include the first NAS data packet and/or the fourth indication information; and
   the third information does not include the AS paging restriction information or any information related to paging restriction information.

Optionally, the first NAS data packet is a NAS data packet received together with an AS leave request or an AS paging rejection.

Optionally, the releasing the terminal to an idle state includes:
in a case that a tenth condition is met, releasing the terminal to an idle state, where
the tenth condition includes at least one of the following:
   the first NAS data packet is received;
   the first NAS data packet and an AS leave request are received;
   the first NAS data packet and an AS paging rejection are received;
   the first NAS data packet and the fourth indication information are received;
   the AS paging restriction information is received;
   in a case that paging restriction information is received, a context of the terminal includes the second indication information or the second indication information is received, where the second indication information indicates accepting paging restriction information; and
   in a case that paging restriction information is received, the context of the terminal includes the third indication information or the third indication information is received, where the second indication information indicates supporting a paging restriction function.

Optionally, the performing an operation of releasing the terminal includes:
in a case that an eleventh condition is met, performing the operation of releasing the terminal, where
the eleventh condition includes at least one of the following:
   paging restriction information is not received;
   in a case that paging restriction information is received, a context of the terminal includes the second indication information or the second indication information is received, where the second indication information indicates not accepting paging restriction information; and
   in a case that paging restriction information is received, the context of the terminal includes the third indication information or the third indication information is received, where the second indication information indicates not supporting a paging restriction function.

Optionally, the performing an operation of releasing the terminal further includes:
in a case that the terminal is released to an inactive state, notifying a second target end that the terminal enters an inactive state.

Optionally, the performing an operation of waiting for a period of time includes at least one of the following:
starting waiting when the first NAS data packet or paging restriction information is sent to the first target end, or starting waiting when first information is received;
before the waiting expires, in a case that a release request of a third target end is received, stopping waiting and performing, according to the release request, the operation of releasing the terminal;
before the waiting expires, in a case that a NAS data packet sent by the third target end is received, sending the received NAS data packet to the terminal;
before the waiting expires, in a case that second indication information sent by the third target end is received, stopping waiting, and performing, according to the second indication information, the operation of releasing the terminal; and
after the waiting expires, performing the operation of releasing the terminal;
   and/or
the performing an operation of starting timing includes at least one of the following:
   starting timing when the first NAS data packet or paging restriction information is sent to the first target end, or starting timing when first information is received;
   before the timing expires, in a case that a release request of a third target end is received, stopping waiting, and performing, according to the release request, the operation of releasing the terminal;
   before the timing expires, in a case that a NAS data packet sent by the third target end is received, sending the received NAS data packet to the terminal; and
   after the timing expires, performing the operation of releasing the terminal, where
   the first information includes at least one of the following: paging restriction information, information used to request to be released to an inactive state, state release tendency information, and a terminal capability; and
   the paging restriction information is generated according to the AS paging restriction information.

In this embodiment of this application, the information processing apparatus 140 can implement the processes implemented in the method embodiment in FIG. 5 of this application, and achieve a same technical effect. To avoid repetition, details are not described herein again.

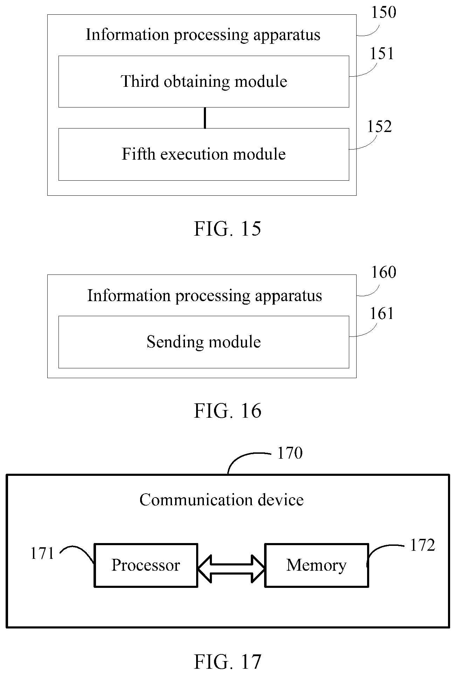

Referring to FIG. 15, FIG. 15 is a schematic structural diagram of another information processing apparatus according to an embodiment of this application. The apparatus is applied to a fifth communication device. As shown in FIG. 15, an information processing apparatus 150 includes:
a third obtaining module 151, configured to obtain paging restriction information or a second NAS data packet; and
a fifth execution module 152, configured to discard or ignore the paging restriction information, or discard or ignore the second NAS data packet, where
the second NAS data packet is a NAS data packet received together with an AS leave request or an AS paging rejection.

Optionally, the discarding or ignoring the paging restriction information includes:
discarding or ignoring the paging restriction information in a case that a twelfth condition is met, where
the twelfth condition includes at least one of the following:
   when the paging restriction information is received, there is no concurrently received leave request or paging rejection; and
   the paging restriction information is received from a RAN.

In this embodiment of this application, the information processing apparatus 150 can implement the processes implemented in the method embodiment in FIG. 6 of this application, and achieve a same technical effect. To avoid repetition, details are not described herein again.

Referring to FIG. 16, FIG. 16 is a schematic structural diagram of another information processing apparatus according to an embodiment of this application. The apparatus is applied to a sixth communication device. As shown in FIG. 16, an information processing apparatus 160 includes:
a sending module 161, configured to send first indication information, where the first indication information is used to indicate at least one of the following: allowing the terminal to concurrently send paging restriction information when sending a NAS leave request or a NAS paging rejection; and not allowing the terminal to concurrently send paging restriction information when sending an AS leave request or an AS paging rejection.

Optionally, the sending first indication information includes: sending the first indication information in a case that a thirteenth condition is met, where
the thirteenth condition includes at least one of the following:
the terminal supports a NAS leave network function;
a network supports and/or allows the terminal to use a NAS leave network function;
the terminal supports a NAS paging rejection function;
the network supports NAS and/or allows the terminal to use a NAS paging rejection function;
the terminal supports a NAS paging restriction function; and
the network supports and/or allows the terminal to use a NAS paging restriction function.

In this embodiment of this application, the information processing apparatus 160 can implement the processes implemented in the method embodiment in FIG. 7 of this application, and achieve a same technical effect. To avoid repetition, details are not described herein again.

Optionally, as shown in FIG. 17, an embodiment of this application further provides a communication device 170, including a processor 171, a memory 172, and a program or an instruction that is stored in the memory 172 and that can be run on the processor 171, where the program or the instruction is executed by the processor 171 to implement the processes of the foregoing information processing method embodiment, and a same technical effect can be achieved. To avoid repetition, details are not described herein again.

An embodiment of this application further provides a readable storage medium. The readable storage medium stores a program or an instruction, and when the program or the instruction is executed by a processor, the processes of the foregoing information processing method embodiment are implemented and a same technical effect can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communications interface, the communications interface is coupled to the processor, and the processor is configured to run a program or an instruction to implement the processes of the foregoing information processing method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer program product. The computer program product is stored in a non-volatile storage medium, and the computer program product is executed by at least one processor to implement the processes of the foregoing information processing method embodiment, and a same technical effect can be achieved. To avoid repetition, details are not described herein again.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "including a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the related technologies may be implemented in a form of a computer software product. The computer software product is stored in a storage medium (such as a ROM/RAM, a hard disk, or an optical disc), and includes several instructions for instructing a terminal (which may be a mobile phone, a computer, a server, an air conditioner, a network side device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. An information processing method, applied to a first communication device and comprising:
performing a first operation or a second operation, wherein
the first operation comprises at least one of the following:
sending a non-access stratum NAS leave request to a network, and sending a NAS paging rejection to the network; and
the second operation comprises at least one of the following:
sending an access stratum AS leave request to the network, and sending an AS paging rejection to the network.

2. The method according to claim 1, wherein the performing a first operation comprises:
performing the first operation in a case that a first condition is met, wherein
the first condition comprises at least one of the following:
the terminal needs to send paging restriction information to the network;
the terminal needs to delete paging restriction information;
NAS information is sent to the network in a case that the terminal sends a leave request or a paging rejection to the network; and
first indication information sent by the network is received, wherein the first indication information is used to indicate at least one of the following: allowing the terminal to concurrently send paging restriction information when sending a NAS leave request or a NAS paging rejection; and not allowing the terminal to send paging restriction information when sending an AS leave request or an AS paging rejection.

3. The method according to claim 1, wherein the performing a second operation comprises:
performing the second operation in a case that a second condition is met, wherein
the second condition comprises at least one of the following:
the terminal prefers to be released to an inactive state; and
the terminal prefers to be released immediately.

4. The method according to claim 1, wherein before the step of performing a first operation or a second operation, the method further comprises:
receiving first indication information sent by the network, wherein the first indication information is used to indicate at least one of the following: allowing the terminal to concurrently send paging restriction information when sending a NAS leave request or a NAS paging rejection; and not allowing the terminal to concurrently send paging restriction information when sending an AS leave request or an AS paging rejection.

5. An information processing method, applied to a second communication device and comprising:
performing a third operation or a fourth operation, wherein
the third operation comprises at least one of the following:
sending paging restriction information to a network; and
sending state release tendency information to the network, wherein the state release tendency information is used to indicate one of the following: no tendency and tending to be released to an idle state; and
the fourth operation comprises at least one of the following:
sending, to the network, information used to request to be released to an inactive state;
sending state release tendency information to the network; and
sending state release tendency information to the network, wherein the state release tendency information is used to indicate tending to be released to an inactive state.

6. The method according to claim 5, wherein
the sending paging restriction information to a network comprises: sending the paging restriction information, and not sending the information used to request to be released to an inactive state; and/or
the sending, to the network, information used to request to be released to an inactive state comprises: sending the information used to request to be released to an inactive state, and not sending the paging restriction information;
and/or
the sending state release tendency information comprises: sending the state release tendency information, and not sending the paging restriction information.

7. The method according to claim 5, wherein when the fourth operation comprises sending state release tendency information to the network, the state release tendency information is used to indicate one of the following: no tendency, tending to be released to an inactive state, and tending to be released to an idle state.

8. The method according to claim 5, wherein the performing a third operation comprises:
performing the third operation in a case that a third condition is met, wherein
the third condition comprises at least one of the following:
the terminal needs to send paging restriction information to the network;
the terminal does not tend to be released to an inactive state;
the terminal does not have a state release tendency; and
the terminal tends to perform paging restriction on the network and the terminal tends to be released to an inactive state, but a priority of the paging restriction information is higher than a priority of the information about tending to be released to an inactive state, or a priority of the paging restriction information is higher than a priority of the state release tendency information.

9. The method according to claim 5, wherein the performing a fourth operation comprises:
performing the fourth operation in a case that a fourth condition is met, wherein
the fourth condition comprises at least one of the following:
the terminal does not need to send paging restriction information to the network;
the terminal tends to be released to an inactive state; and
the terminal tends to perform paging restriction on the network and the terminal tends to be released to an inactive state, but a priority of the paging restriction information is lower than a priority of the information about tending to be released to an inactive state, or a priority of the paging restriction information is lower than a priority of the state release tendency information.

10. An information processing method, applied to a third communication device and comprising:
obtaining at least one of the following: first information, a notification that the terminal enters an inactive state, information used to instruct to delete paging restriction information, and second information; and
performing a fifth operation according to the obtained information, wherein
the first information comprises at least one of the following: paging restriction information, information used to request to be released to an inactive state, state release tendency information, and a terminal capability; and the second information comprises at least one of the following: a network policy and a network capability; and
the fifth operation comprises at least one of the following:
determining that a priority of the paging restriction information is higher than a priority of the information about tending to be released to an inactive state, or determining that a priority of the paging restriction information is higher than a priority of the state release tendency information;
determining that a priority of the information about tending to be released to an inactive state is higher than a priority of the paging restriction information, or determining that a priority of the state release tendency information is higher than a priority of the paging restriction information;
determining to accept paging restriction information, or determining not to accept paging restriction information;
releasing the terminal to an idle state, or releasing the terminal to an inactive state;
deleting paging restriction information;
sending second indication information, wherein the second indication information is used to indicate one of the following: accepting paging restriction information and not accepting paging restriction information; and
sending third indication information, wherein the third indication information is used to indicate at least one of the following: supporting a paging restriction function and not supporting a paging restriction function.

11. The method according to claim 10, wherein
the terminal capability comprises at least one of the following: the terminal supports a paging restriction function, the terminal supports a leave network function, and the terminal supports a paging rejection function;
and/or
the network capability comprises at least one of the following: a network supports a paging restriction function, the network supports a leave network function, and the network supports a paging rejection function;
and/or
the network policy comprises at least one of the following:
a paging restriction related operation is performed on the terminal by using paging restriction information of the terminal, or paging restriction information of the terminal is not used;
paging restriction is performed on the terminal, or paging restriction is not performed on the terminal;
state release tendency information of the terminal is used, or state release tendency information of the terminal is not used;
information, of the terminal, about tending to be released to an inactive state is used, or information, of the terminal, about tending to be released to an inactive state is not used;
a priority of the paging restriction information is higher than a priority of the state release tendency information, or a priority of the paging restriction information is higher than a priority of the information about tending to be released to an inactive state; and
a priority of the information about tending to be released to an inactive state is higher than a priority of the paging restriction information, or a priority of the state release tendency information is higher than a priority of the paging restriction information;
and/or
the determining to accept paging restriction information comprises at least one of the following:
storing the paging restriction information;
releasing the terminal to an idle state; and
sending the second indication information to a RAN, wherein the second indication information indicates accepting paging restriction information;
and/or
the determining not to accept paging restriction information comprises at least one of the following:
discarding or ignoring the paging restriction information;
instructing the RAN to release the terminal to a non-connected state;
sending the second indication information to the RAN, wherein the second indication information instructs not to accept paging restriction information; and
in a case that the notification that the terminal enters an inactive state is received, keeping the terminal in an inactive state.

12. The method according to claim 10, wherein the determining not to accept paging restriction information and/or releasing the terminal to an inactive state comprises:
in a case that a fifth condition is met, determining not to accept the paging restriction information and/or releasing the terminal to an inactive state, wherein
the fifth condition comprises at least one of the following:
the first information comprises paging restriction information;
the notification that the terminal enters an inactive state is received;
the first information comprises one of the following: information used to request to be released to an inactive state and state release tendency information, wherein the state release tendency information is used to indicate tending to be released to an inactive state;
the network policy comprises at least one of the following: paging restriction is not performed on the terminal, paging restriction information of the terminal is not used, the priority of the information about tending to be released to an inactive state is higher than the priority of the paging restriction information, the priority of the state release tendency information is higher than the priority of the paging restriction information, state release tendency information of the terminal is used, and information, of the terminal, about tending to be released to an inactive state is used; and
it is determined that the priority of the information about tending to be released to an inactive state is higher than the priority of the paging restriction information, or it is determined that the priority of the state release tendency information is higher than the priority of the paging restriction information.

13. The method according to claim 10, wherein the determining to accept paging restriction information and/or releasing the terminal to an idle state comprises:
in a case that a sixth condition is met, determining to accept the paging restriction information and/or releasing the terminal to an idle state, wherein
the sixth condition comprises at least one of the following:
the first information comprises paging restriction information;
the first information comprises state release tendency information, wherein the state release tendency information is used to indicate tending to be released to an idle state;
the network policy comprises at least one of the following: a paging restriction related operation is performed on the terminal by using paging restriction information of the terminal, paging restriction is performed on the terminal, the priority of the paging restriction information is higher than the priority of the information about tending to be released to an inactive state, the priority of the paging restriction information is higher than the priority of the state release tendency information, state release tendency information of the terminal is not used, and information, of the terminal, about tending to be released to an inactive state is not used;
it is determined that the priority of the paging restriction information is higher than the priority of the information about tending to be released to an inactive state, or it is determined that the priority of the paging restriction information is higher than the priority of the state release tendency information; and
a leave request or a paging rejection of the terminal is received at the same time of receiving the paging restriction information.

14. The method according to claim 10, wherein the determining to accept paging restriction information and/or to releasing the terminal to an idle state comprises:
in a case that a sixth condition is met, determining to accept the paging restriction information and/or releasing the terminal to an idle state, wherein
the sixth condition comprises at least one of the following:
the first information comprises paging restriction information, and the notification that the terminal enters an inactive state is received;
the first information comprises paging restriction information and one of the following: information used to request to be released to an inactive state and state release tendency information, wherein the state release tendency information is used to indicate tending to be released to an inactive state;
the network policy comprises at least one of the following: a paging restriction related operation is performed on the terminal by using paging restriction information of the terminal, paging restriction is performed on the terminal, the priority of the paging restriction information is higher than the priority of the information about tending to be released to an inactive state, and the priority of the paging restriction information is higher than the priority of the state release tendency information; and
it is determined that the priority of the paging restriction information is higher than the priority of the information about tending to be released to an inactive state, or it is determined that the priority of the paging restriction information is higher than the priority of the state release tendency information.

15. The method according to claim 10, wherein the method further comprises:
in a case that a seventh condition is met, subscribing to the notification that the terminal enters an inactive state from a radio access network RAN, wherein
the seventh condition comprises at least one of the following:
the terminal supports a paging restriction function;
the network supports and/or allows the terminal to use a paging restriction function; and
the network policy comprises at least one of the following: a paging restriction related operation is performed on the terminal by using paging restriction information of the terminal, paging restriction is performed on the terminal, the priority of the paging restriction information is higher than the priority of the information about tending to be released to an inactive state, and the priority of the paging restriction information is higher than the priority of the state release tendency information.

16. The method according to claim 10, wherein the deleting paging restriction information comprises:
in a case that an eighth condition is met, deleting the paging restriction information, wherein
the eighth condition comprises at least one of the following:
information used to instruct to delete paging restriction information is received; and
a context of the terminal stores paging restriction information.

17. An information processing method, applied to a fourth communication device and comprising:
obtaining third information and/or fourth information; and
performing a sixth operation according to the third information, wherein
the third information comprises at least one of the following: a leave request; paging rejection; a first NAS data packet; fourth indication information, wherein the fourth indication information is used to indicate that the first NAS data packet comprises paging restriction information; AS paging restriction information; and information used to instruct to delete paging restriction information;
the fourth information comprises at least one of the following: second indication information, wherein the second indication information is used to indicate one of the following: accepting paging restriction information and not accepting paging restriction information; and third indication information, wherein the third indication information is used to indicate at least one of the following: supporting a paging restriction function and not supporting a paging restriction function; and
the sixth operation comprises at least one of the following:
sending the first NAS data packet to a first target end;
sending, to the first target end, the information used to instruct to delete paging restriction information;
storing the fourth indication information;
releasing the terminal to an idle state or releasing the terminal to a non-connected state;
performing an operation of releasing the terminal;
performing an operation of waiting for a period of time; and
performing an operation of starting timing.

18. The method according to claim 17, wherein the sending, to the first target end, the information used to instruct to delete paging restriction information comprises:
in a case that a ninth condition is met, sending, to the first target end, the information used to instruct to delete paging restriction information, wherein
the ninth condition comprises at least one of the following:
the third information comprises the leave request or the paging rejection;
the third information comprises the information used to instruct to delete paging restriction information;
the third information does not comprise the first NAS data packet and/or the fourth indication information; and
the third information does not comprise the AS paging restriction information or any information related to paging restriction information.

19. The method according to claim 17, wherein the first NAS data packet is a NAS data packet received together with an AS leave request or an AS paging rejection.

20. The method according to claim 17, wherein the releasing the terminal to an idle state comprises:
in a case that a tenth condition is met, releasing the terminal to an idle state, wherein
the tenth condition comprises at least one of the following:
the first NAS data packet is received;
the first NAS data packet and an AS leave request are received;
the first NAS data packet and an AS paging rejection are received;
the first NAS data packet and the fourth indication information are received;
the AS paging restriction information is received;
in a case that paging restriction information is received, a context of the terminal comprises the second indication information or the second indication information is received, wherein the second indication information indicates accepting paging restriction information; and
in a case that paging restriction information is received, the context of the terminal comprises the third indication information or the third indication information is received, wherein the second indication information indicates supporting a paging restriction function.

21. The method according to claim 17, wherein the performing an operation of releasing the terminal comprises:
in a case that an eleventh condition is met, performing the operation of releasing the terminal, wherein
the eleventh condition comprises at least one of the following:
paging restriction information is not received;
in a case that paging restriction information is received, a context of the terminal comprises the second indication information or the second indication information is received, wherein the second indication information indicates not accepting paging restriction information; and
in a case that paging restriction information is received, the context of the terminal comprises the third indication information or the third indication information is received, wherein the second indication information indicates not supporting a paging restriction function.

22. The method according to claim 17, wherein the performing an operation of releasing the terminal further comprises:
in a case that the terminal is released to an inactive state, notifying a second target end that the terminal enters an inactive state.

23. The method according to claim 17, wherein the performing an operation of waiting for a period of time comprises at least one of the following:
starting waiting when the first NAS data packet or paging restriction information is sent to the first target end, or starting waiting when first information is received;
before the waiting expires, in a case that a release request of a third target end is received, stopping waiting and performing, according to the release request, the operation of releasing the terminal;
before the waiting expires, in a case that a NAS data packet sent by the third target end is received, sending the received NAS data packet to the terminal;
before the waiting expires, in a case that second indication information sent by the third target end is received, stopping waiting, and performing, according to the second indication information, the operation of releasing the terminal; and
after the waiting expires, performing the operation of releasing the terminal;
and/or
the performing an operation of starting timing comprises at least one of the following:
starting timing when the first NAS data packet or paging restriction information is sent to the first target end, or starting timing when first information is received;
before the timing expires, in a case that a release request of a third target end is received, stopping waiting, and performing, according to the release request, the operation of releasing the terminal;
before the timing expires, in a case that a NAS data packet sent by the third target end is received, sending the received NAS data packet to the terminal; and
after the timing expires, performing the operation of releasing the terminal, wherein
the first information comprises at least one of the following: paging restriction information, information used to request to be released to an inactive state, state release tendency information, and a terminal capability; and
the paging restriction information is generated according to the AS paging restriction information.

24. An information processing method, applied to a fifth communication device and comprising:
obtaining paging restriction information or a second NAS data packet; and
discarding or ignoring the paging restriction information, or discarding or ignoring the second NAS data packet, wherein
the second NAS data packet is a NAS data packet received together with an AS leave request or an AS paging rejection.

25. The method according to claim 24, wherein the discarding or ignoring the paging restriction information comprises:
discarding or ignoring the paging restriction information in a case that a twelfth condition is met, wherein
the twelfth condition comprises at least one of the following:
when the paging restriction information is received, there is no concurrently received leave request or paging rejection; and
the paging restriction information is received from a RAN.

26. An information processing method, applied to a sixth communication device and comprising:
sending first indication information, wherein the first indication information is used to indicate at least one of the following: allowing the terminal to concurrently send paging restriction information when sending a NAS leave request or a NAS paging rejection; and not allowing the terminal to concurrently send paging restriction information when sending an AS leave request or an AS paging rejection.

27. The method according to claim 26, wherein the sending first indication information comprises: sending the first indication information in a case that a thirteenth condition is met, wherein
the thirteenth condition comprises at least one of the following:
the terminal supports a NAS leave network function;
a network supports and/or allows the terminal to use a NAS leave network function;
the terminal supports a NAS paging rejection function;
the network supports NAS and/or allows the terminal to use a NAS paging rejection function;
the terminal supports a NAS paging restriction function; and
the network supports and/or allows the terminal to use a NAS paging restriction function.

28. An information processing apparatus, applied to a first communication device and comprising:
a first execution module, configured to perform a first operation or a second operation, wherein
the first operation comprises at least one of the following:
sending a NAS leave request to a network, and sending a NAS paging rejection to the network; and
the second operation comprises at least one of the following:
sending an AS leave request to the network, and sending an AS paging rejection to the network.

29. An information processing apparatus, applied to a second communication device and comprising:
a second execution module, configured to perform a third operation or a fourth operation, wherein
the third operation comprises at least one of the following:
sending paging restriction information to a network; and
sending state release tendency information to the network, wherein the state release tendency information is used to indicate one of the following: no tendency and tending to be released to an idle state; and
the fourth operation comprises at least one of the following:
sending, to the network, information used to request to be released to an inactive state;
sending state release tendency information to the network; and
sending state release tendency information to the network, wherein the state release tendency information is used to indicate tending to be released to an inactive state.

30. An information processing apparatus, applied to a third communication device and comprising:
a first obtaining module, configured to obtain at least one of the following: first information, a notification that the terminal enters an inactive state, information used to instruct to delete paging restriction information, and second information; and
a third execution module, configured to perform a fifth operation according to the obtained information, wherein
the first information comprises at least one of the following: paging restriction information, information used to request to be released to an inactive state, state release tendency information, and a terminal capability; and the second information comprises at least one of the following: a network policy and a network capability; and
the fifth operation comprises at least one of the following:
determining that a priority of the paging restriction information is higher than a priority of the information about tending to be released to an inactive state, or determining that a priority of the paging restriction information is higher than a priority of the state release tendency information;
determining that a priority of the information about tending to be released to an inactive state is higher than a priority of the paging restriction information, or determining that a priority of the state release tendency information is higher than a priority of the paging restriction information;
determining to accept paging restriction information, or determining not to accept paging restriction information;
releasing the terminal to an idle state, or releasing the terminal to an inactive state;
deleting paging restriction information;
sending second indication information, wherein the second indication information is used to indicate one of the following: accepting paging restriction information and not accepting paging restriction information; and
sending third indication information, wherein the third indication information is used to indicate at least one of the following: supporting a paging restriction function and not supporting a paging restriction function.

31. An information processing apparatus, applied to a fourth communication device and comprising:
a second obtaining module, configured to obtain third information and/or fourth information; and
a fourth execution module, configured to perform a sixth operation according to the third information and/or the fourth information, wherein
the third information comprises at least one of the following: a leave request; paging rejection; a first NAS data packet; fourth indication information, wherein the fourth indication information is used to indicate that the first NAS data packet comprises paging restriction information; AS paging restriction information; and information used to instruct to delete paging restriction information;
the fourth information comprises at least one of the following: second indication information, wherein the second indication information is used to indicate one of the following: accepting paging restriction information and not accepting paging restriction information; and third indication information, wherein the third indication information is used to indicate at least one of the following: supporting a paging restriction function and not supporting a paging restriction function; and
the sixth operation comprises at least one of the following:
sending the first NAS data packet to a first target end;
sending, to the first target end, the information used to instruct to delete paging restriction information;
storing the fourth indication information;
releasing the terminal to an idle state or releasing the terminal to a non-connected state;
performing an operation of releasing the terminal;
performing an operation of waiting for a period of time; and
performing an operation of starting timing.

32. An information processing apparatus, applied to a fifth communication device and comprising:
a third obtaining module, configured to obtain paging restriction information or a second NAS data packet; and
a fifth execution module, configured to discard or ignore the paging restriction information, or discard or ignore the second NAS data packet, wherein
the second NAS data packet is a NAS data packet received together with an AS leave request or an AS paging rejection.

33. An information processing apparatus, applied to a sixth communication device and comprising:
a sending module, configured to send first indication information, wherein the first indication information is used to indicate at least one of the following: allowing the terminal to concurrently send paging restriction information when sending a NAS leave request or a NAS paging rejection; and not allowing the terminal to concurrently send paging restriction information when sending an AS leave request or an AS paging rejection.

34. A communication device, comprising a processor, a memory, and a program or an instruction that is stored in the memory and that can be run on the processor, wherein the program or the instruction is executed by the processor to implement the steps of the information processing method according to any one of claims 1 to 4, or the steps of the information processing method according to any one of claims 5 to 9, or the steps of the information processing method according to any one of claims 10 to 16, or the steps of the information processing method according to any one of claims 17 to 23, or the steps of the information processing method according to claim 24 or 25, or the steps of the information processing method according to claim 26 or 27.

35. A readable storage medium, wherein the readable storage medium stores a program or an instruction, and the program or the instruction is executed by a processor to implement the steps of the information processing method according to any one of claims 1 to 4, or the steps of the information processing method according to any one of claims 5 to 9, or the steps of the information processing method according to any one of claims 10 to 16, or the steps of the information processing method according to any one of claims 17 to 23, or the steps of the information processing method according to claim 24 or 25, or the steps of the information processing method according to claim 26 or 27.

36. A chip, comprising a processor and a communication interface, wherein the communication interface is coupled to the processor, and the processor is configured to run a program or an instruction to implement the steps of the information processing method according to any one of claims 1 to 4, or the steps of the information processing method according to any one of claims 5 to 9, or the steps of the information processing method according to any one of claims 10 to 16, or the steps of the information processing method according to any one of claims 17 to 23, or the steps of the information processing method according to claim 24 or 25, or the steps of the information processing method according to claim 26 or 27.

37. A computer program product, wherein the computer program product is stored in a non-volatile storage medium, and the computer program product is executed by at least one processor to implement the steps of the information transmission method according to any one of claims 1 to 11, or the steps of the information processing method according to any one of claims 5 to 9, or the steps of the information processing method according to any one of claims 10 to 16, or the steps of the information processing method according to any one of claims 17 to 23, or the steps of the information processing method according to claim 24 or 25, or the steps of the information processing method according to claim 26 or 27.

38. A communication device, configured to perform the steps of the information transmission method according to any one of claims 1 to 11, or the steps of the information processing method according to any one of claims 5 to 9, or the steps of the information processing method according to any one of claims 10 to 16, or the steps of the information processing method according to any one of claims 17 to 23, or the steps of the information processing method according to claim 24 or 25, or the steps of the information processing method according to claim 26 or 27.
